(19) Europäisches Patentamt
European Patent Office
Office européen des brevets

(11) **EP 4 580 890 B1**

(12) **EUROPÄISCHE PATENTSCHRIFT**

(45) Veröffentlichungstag und Bekanntmachung des Hinweises auf die Patenterteilung:
**24.06.2026 Patentblatt 2026/26**

(21) Anmeldenummer: **23758587.2**

(22) Anmeldetag: **17.08.2023**

(51) Internationale Patentklassifikation (IPC):
***B60B 17/00*** *(2006.01)*

(52) Gemeinsame Patentklassifikation (CPC):
**B60B 17/0024; B60B 17/0037; B60B 17/0041; B60B 17/0044; B60B 17/0048;** B60B 17/0055; B60B 2900/131; B60B 2900/133; B60Y 2200/30

(86) Internationale Anmeldenummer:
**PCT/EP2023/072693**

(87) Internationale Veröffentlichungsnummer:
**WO 2025/036565 (20.02.2025 Gazette 2025/08)**

(54) **MEHRTEILIGES GUMMIGEFEDERTES RAD FÜR EIN SCHIENENFAHRZEUG MIT EINEM SCHWINGUNGSTILGER**

MULTIPART RUBBER-SPRUNG WHEEL INTENDED FOR A RAIL VEHICLE AND HAVING A VIBRATION DAMPER

ROUE À RESSORT EN CAOUTCHOUC EN PLUSIEURS PARTIES DESTINÉE À UN VÉHICULE FERROVIAIRE ET COMPORTANT UN AMORTISSEUR DE VIBRATIONS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**09.07.2025 Patentblatt 2025/28**

(73) Patentinhaber: **Gutehoffnungshütte Radsatz GmbH**
**46145 Oberhausen (DE)**

(72) Erfinder:
• **LEHNERT, Torben Felix**
**46119 Oberhausen (DE)**
• **GERLACH, Thomas Georg**
**47506 Neukirchen-Vluyn (DE)**

• **JANSSEN, Mirco**
**46147 Oberhausen (DE)**
• **JENNE, Sven**
**40883 Ratingen (DE)**
• **HÖVELS, Andreas**
**48431 Rheine (DE)**

(74) Vertreter: **Dr. Solf & Zapf**
**Patent- und Rechtsanwalts PartG mbB**
**Schlossbleiche 20**
**42103 Wuppertal (DE)**

(56) Entgegenhaltungen:
EP-B1- 0 020 284    AT-B- 364 772
CH-A- 299 561    DE-A1- 2 835 020
DE-C1- 3 136 275

**Beschreibung**

Die Erfindung betrifft ein mehrteiliges gummigefedertes Schienenfahrzeugrad mit mindestens einem zwischen einem Radkörper und einem Radreifen angeordneten Gummiring oder mit mehreren zwischen einem Radkörper und einem Radreifen angeordneten einzelnen Gummielementen, wobei diese(r) mittels eines Spannringes zwischen dem Radkörper und dem Radreifen verspannt sind und der Spannring mittels Befestigungselementen am Radkörper lösbar befestigt ist.

Derartige, in der Fachsprache des Schienenfahrzeugsektors "gummigefederte Räder" genannte Räder weisen durch den Gummiring oder die Mehrzahl der Gummielemente eine elastische Federung auf, die der Fahrkomforterhöhung für die Fahrgäste in den Schienenfahrzeugen dient, Stöße, Schwingungen sowie Vibrationen dämpft und somit auch die Fahrwegtrassierung, also die Gleise und den Oberbau, sowie auch an das Rad angrenzende Bauteile, wie Fahrwerk und Drehgestelle etc., schont und außerdem auch noch Bodenerschütterungen vermindert. Sie werden insbesondere im Nah- und Regionalverkehr, in Straßenbahnen, Stadt- und U-Bahnen, S-Bahnen und Metros eingesetzt. Ein Vorteil gegenüber klassischen Vollrädern, die einteilig aus Stahl ausgeführt sind, ist dabei, dass nach Verschleiß des Rades nur der Radreifen mit gegebenenfalls dem Gummiring oder den Gummielementen auszutauschen ist, wobei hingegen beim Vollrad das komplette Rad ersetzt werden muss.

Gummigefederte Räder sind in vielfältigen Ausführungen bekannt und in zahlreichen Patentschriften beschrieben, wie z. B. in den Dokumenten EP 0 489 455 B1, EP 0 733 493 B1, EP 0 827 574 B1, EP 2 881 260 B1, EP 3 218 208 B1 und EP 3 509 872 B1.

Besonders hervorzuheben sind daraus im Rahmen der vorliegenden Anmeldung die Patente EP 0 489 455 B1 und EP 3 218 208 B1, in denen jeweils übereinstimmend ein Rad für ein Schienenfahrzeug beschrieben ist, aufweisend einen Radreifen mit einem am Innenumfang des Radreifens ausgebildeten, sich in Richtung der Rotationsachse des Rades erstreckenden umlaufenden Steg, einen Radkörper mit einem am Außenumfang und an einer axialen Stirnseite des Radkörpers ausgebildeten und radial nach außen verlaufenden Ringflansch, und einen an dem Radkörper an einer dem Ringflansch gegenüberliegenden Stirnseite über Befestigungsmittel kraft- und/oder formschlüssig angebrachten Spannring, wobei zwischen dem Spannring und dem umlaufenden Steg des Radreifens und zwischen dem umlaufenden Steg des Radreifens und dem Ringflansch des Radkörpers jeweils Dämpfungsmittel angeordnet sind. Die in diesen Dokumenten beschriebenen Räder werden als gattungsgemäß angesehen.

So beschreibt die Patentschrift EP 0 489 455 B1 eine gattungsgemäße Ausführungsform eines gummigefederten Rades. Hierbei bestehen die Dämpfungsmittel, die in einem U- bzw. V-förmig ausgebildeten ringförmigem Zwischenraum zwischen Radkörper, Radreifen und Spannring angeordnet sind, aus einem als Dämpfungsmittel fungierenden Gummiring, der vorzugsweise einen Winkel von 60° mit der Radachse einschließt, und der nach seiner Montage durch einen Spannring vorgespannt ist. Das bekannte Rad zeichnet sich je nach Winkelanstellung des Gummiringes zur Radachse (15°, 30°, 60° oder größer, aber ≤ 90°) durch mittlere bis hohe Steifigkeiten aus und hat damit geringe bis mittlere Feder-/Dämpfereigenschaften. Mit steigender Winkelstellung der Gummiringe verlagert sich dabei eine Beanspruchung durch Druck mehr und mehr in Richtung einer Schubbeanspruchung.

Die Patentschrift EP 3 218 208 B1 sieht dabei zusätzlich vor, dass die elastomeren Dämpfungsmittel jeweils als mindestens zwei separate, sich in Umlaufrichtung des Rades erstreckende Kreisringsegmente ausgebildet sind, wobei die Kreisringsegmente an ihren Kontaktflächen zumindest einseitig mindestens zwei sich in axialer Richtung erstreckende und in Umlaufrichtung beabstandete Zentriernocken aufweisen, die formschlüssig in entsprechende Ausnehmungen an dem umlaufenden Steg des Radreifens und an dem Ringflansch des Radkörpers beziehungsweise an dem Spannring eingreifen, wobei die Kreisringsegmente einen Elastomerwerkstoff als Kern aufweisen, der zumindest an seinen an dem umlaufenden Steg des Radreifens und an dem Spannring beziehungsweise an dem Ringflansch des Radkörpers anliegenden Kontaktflächen durch Blechsegmente umschlossen ist.

Zwar ist im Vergleich zu Vollrädern der Engineering-Aufwand gattungsgemäßer gummigefederter Räder höher, da sie vom Aufbau her komplexer sind, jedoch wird dies dadurch bei Weitem aufgewogen, dass die insbesondere als V-förmige Gummiringe bzw. Ringsegmente zwischen Radkörper und Reifen ausgebildeten Dämpfungsmittel für sehr viel mehr Fahrkomfort sorgen. Die Konstrukteure müssen also immer Festigkeit, Federkomfort und Montierbarkeit der Räder in Einklang bringen.

Insbesondere im urbanen Raum gewinnt neben der Federung von Rädern auch der Lärmschutz immer mehr an Bedeutung - dies nicht zuletzt aufgrund der Nähe der zahlreichen Anwohner in Ballungsräumen an den innerstädtischen und regionalen Schienenverkehrsstrecken. So steigen die Anforderungen an den Schienenverkehr in Bezug auf dessen Umweltverträglichkeit und die in Lärmschutzverordnungen geforderten Grenzwerte werden strenger.

Im Laufe der Jahre wurden daher verschiedene Varianten von Schallabsorbern für Schienenfahrzeugräder entwickelt und im Einsatz erprobt. Bekannte Ausführungsformen von Schallabsorbern sind Stahlkiesabsorber, Schrumpfringe, Dämpfungsreibringe, Beschichtungen mit in den Radsteg eingebrachten Kunststoffschichten und Blechen, ein Ausschäumen der Radscheibe mit Kunststoffen und Absorberschirme.

Schallabsorber werden an Vollrädern oder bereiften Rädern angebaut und insbesondere am Radsteg oder am Radkranz eines Vollrads oder eines bereiften Rades angebracht. Sie sind in der Regel verschraubt oder mit Vorspannung in Nuten eingesetzt. Diese Schallabsorber wirken breitbandig über einen Frequenzbereich von > 0 Hz bis zu mindestens > 6 kHz, insbesondere bis zu 8 kHz, und reduzieren dadurch den gemittelten Schalldruckpegel über das gesamte Frequenzspektrum für das Rollgeräusch.

Das Prinzip beruht dabei im Wesentlichen immer auf Dissipation, d. h. darauf, die inneren Energieverlustfaktoren des Rades zu erhöhen, sei es durch Umwandlung der Schwingungen in Wärme in einem viskoelastischen Kunststoff oder durch Entzug der Schwingungsenergie durch Festkörperreibung.

In der Praxis durchgesetzt haben sich unter den Gesichtspunkten der zu beachtenden eingeschränkten Einbauverhältnisse, der durch die Schallabsorber bedingten Gewichtserhöhungen, den zusätzlichen Kosten und dem erhöhten Wartungsaufwand insbesondere Dämpfungsringe, Ringabsorber und Plattenabsorber mit Zwischenschichten aus Elastomermaterialien.

Schwingungs- bzw. geräuschgedämpfte Räder sind in den folgenden Dokumenten beschrieben: DE 30 33 246 C2, DE 31 20 068 C2, DE 32 43 028 C1, DE 33 16 759 C1, DE 19 617 684 A1, EP 2 554 399 B1 und DE 19 832 266 A1. Erläutert sind darin insbesondere verschiedene Ausführungsformen von am Radkranz befestigten Schallabsorbern von Vollrädern. Die DE 31 36 275 C1, AT 364 772 B, DE 2835 020 A1, CH 299 561 A und EP 0 020 284 B1, welche ebenfalls als gattungsgemäß angesehen werden, beschreiben gummigefederte Schienenräder mit relativ breitbandig wirkenden Schallabsorbern.

Bei gummigefederten Rädern wird das Rollgeräusch allein schon durch die dämpfend wirkenden Gummibauteile, die zwischen dem Radreifen und Radkörper sowie Spannring zur Vorspannung der Gummibauteile eingebaut sind und üblicherweise aus Polymer- bzw. insbesondere Elastomerwerkstoffen bestehen, sehr gut gedämpft. Durch zusätzliche, breitbandig wirkende Schallabsorber, die stirnseitig außen am Radreifen angebaut werden können, kann aber das Rollgeräusch noch weitergehend gesenkt werden.

So sind in der europäischen Patentschrift EP 1 892 122 B1 Schallabsorber beschrieben, die an einem Radreifen eines gummigefederten Rades montiert und als geschlitzte Platten mit dazwischenliegenden Dämpfungsschichten ausgebildet sind. In der europäischen Patentschrift EP 3 429 870 B1 ist ein gummigefedertes Rad beschrieben, welches - um die Schallabstrahlung zu senken - zusätzlich mit einem Dämpfungsring ausgerüstet ist, der an der Radreifenunterseite eingelegt wird.

Jedoch kann nachteiligerweise durch die bekannten Schallabsorber ein Kurvenquietschen in der Regel nicht gänzlich unterdrückt werden und ist bei Straßen- und Stadtbahnen die Schallquelle, die am häufigsten zu Beschwerden führt. Kurvenquietschen ist ein "lokales" Problem. Darin liegt gleichermaßen dessen Brisanz, aber auch die Chance zu unterschiedlichen Lösungsstrategien.

Das Ansinnen, eine Vermeidung oder Reduktion des Kurvenquietschens zu bewerkstelligen, erfordert dabei eine Betrachtung aller potentiellen Einflussgrößen, wie z. B. der Trassierung, des Fahrwerkskonzepts, des Einflusses aus dem Rad-Schiene-Kontakt und der Radbauart selbst. Hinsichtlich entsprechender Analysen und bekannter Lösungsansätze zur Minderung des Kurvenquietschens wird exemplarisch verwiesen auf: Thomas Gerlach et al.: Methods for developing low-noise wheels in terms of rolling noise, curve squeal and ground vibrations, 20th International Wheelset Congress, Chicago, 2023, May 8-11.

Als gesichert gilt, dass die Ursache für das Kurvenquietschen im Wirkmechanismus einer anti-radialen Einstellung des Radsatzes oder Radpaares im Gleisbogen mit Schlupf in Quer- und Längsrichtung zu sehen ist, der auch Stick-Slip Effekt genannt wird. Bei diesem Effekt befindet sich der Rad-Schiene-Kontakt in einem instationären Zustand, in dem sich ein Wechselspiel zwischen Haften ("stick") und Gleiten ("slip") einstellt. Dadurch wird das Rad in seinen Eigenfrequenzen intensiv zu Schwingungen, insbesondere zu Axialschwingungen, angeregt, was zu den unangenehmen hochtonalen Schallereignissen in ein oder mehreren Reintönen führt. Das Rad wird typischerweise in dem Frequenzbereich von 500 - 8000 Hz angeregt, wobei das Kurvenquietschen den Rollgeräuschpegel per Definition um mindestens 10 dB(A) überschreitet und Werte von größer 120 dB(A) erreichen kann.

Kurvenquietschen wird als sogenanntes Laufflächenquietschen in der Regel durch das bogeninnere Rad des führenden Radsatzes verursacht. Das bogenäußere Rad wird in der Regel bei Spurkranzanlauf zu dem typischen Kurvenkreischen bzw. auch -zischen angeregt. Die Erkenntnisse aus Forschung und Praxis zeigen, dass das Auftreten von Kurvenquietschen auch sehr stark durch äußere Bedingungen beeinflusst wird. So tritt Kurvenquietschen sehr häufig in engen Kreisbögen mit Radien kleiner 200 m bis 300 m auf, dabei aber selten bei nasser Witterung, was wahrscheinlich darauf zurückzuführen ist, dass die Feuchtigkeit die Reibungszahl zwischen Rad und Schiene und damit das "Sticking" (temporäres Haften) des Rades an der Schiene senkt. Das Phänomen Kurvenquietschen ist natürlich noch von vielen anderen Parametern, wie z. B. dem Schienenzustand, der Temperatur, der Luftfeuchtigkeit, der Radbauform und anderer äußerer Einflüsse abhängig. Insbesondere bei trockener Fahrbahn steigt die Häufigkeit des Kurvenquietschens deutlich.

Mit der Strategie des Einsatzes gummigefederter Räder kann im Vergleich mit Vollrädern eine Reduzierung um ca. 10 dB bis 15 dB und durch den zusätzlichen Einsatz von Radschallabsorbern eine weitere Minderung von ca. 15 dB bis 30 dB erreicht werden. Jedoch ist ein Kurvenquietschen durch die bekannten Schallabsorber nicht gänzlich zu eliminieren.

Ein Nachteil ist dabei, dass Schallabsorber, die z. B. an den Stirnseiten der Radreifen angebracht sind, ein nicht unerhebliches Mehrgewicht verursachen und damit zur Erhöhung von unabgefederten Massen führen, die ihrerseits Schwingungen verursachen und dadurch den Fahrkomfort negativ beeinflussen sowie Gleise und Oberbau höher beanspruchen als ein Rad ohne einen solchen Schallabsorber, wobei auch erhöhte Bodenerschütterungen bewirkt werden.

Der Erfindung liegt daher die Aufgabe zugrunde, ein gummigefedertes Schienenfahrzeugrad der eingangs genannten Art zur Verfügung zu stellen, welches die vorstehend genannten Nachteile und Probleme vermeidet und sich somit durch eine, insbesondere bei Kurvenfahrten, gegenüber dem Stand der Technik verringerte Geräuschemission, eine hohe Beanspruchungsfähigkeit, eine lange Lebensdauer, ein gutes Feder- und Dämpfungsvermögen, eine wenig raumgreifende Bauform, ein optimales Masse-Leistungs-Verhältnis, die Möglichkeit einer einfachen Wartung und Austauschbarkeit sowie durch eine hohe Wirtschaftlichkeit auszeichnet.

Die Aufgabe wird erfindungsgemäß dadurch gelöst, dass der Radreifen eine oder mehrere Aussparung(en) aufweist, an oder in der/denen mindestens ein Schwingungstilger, bestehend aus einer oder mehreren Schwingungstilgermasse(n) und aus einem oder mehreren Feder-/Dämpfungselement(en), angekoppelt oder eingebettet ist, wobei die Schwingungstilgermasse(n) der/des Schwingungstilger(s) nicht größer ist/sind als 10 % der modalen Masse des Radreifens des Schienenfahrzeugrades. Die Schwingungstilgermassen können bevorzugt aus Stahl, Leicht- oder Schwermetallwerkstoffen und die Feder-/Dämpfungselemente vorzugsweise aus einem polymeren Werkstoff, insbesondere aus einem Elastomer, bestehen.

Der Radreifen enthält demgemäß also innerhalb des Bauteils einen oder mehrere Schwingungstilger zur Tilgung von relevanten Eigenfrequenzen des Rades, um das Rollgeräusch und hier insbesondere das Kurvenquietschen beim Durchfahren von Schienenfahrzeugen in engen Bögen zu verhindern. Zur Unterbringung des/der Schwingungstilger sind dazu im Radreifen eine oder mehrere Aussparungen vorgesehen, in die eine oder mehrere Schwingungstilgermassen in oder an Dämpfungsmaterialien aus Polymer- bzw. Elastomerwerkstoffen in den Aussparungen am Radreifen eingebettet oder angekoppelt sind.

Schwingungstilger werden gelegentlich als besondere Ausführungen von Schwingungsdämpfern angesehen, wobei jedoch die VDI-Richtlinie VDI 3833, Blatt 2 "Schwingungsdämpfer und Schwingungstilger" (Dezember 2006) eindeutig zwischen Schwingungsisolierung, Schwingungsdämpfung und Schwingungstilgung differenziert.

Die Spezifik von Schwingungstilgern besteht darin, dass es sich dabei um Feder-Masse-Systeme handelt, in denen die Eigenfrequenz(en) des Tilgers auf die zu eliminierende(n) relevante(n) Resonanzfrequenz(en) des schwingenden Bauteils, also im vorliegenden Fall des Schienenrades, abgestimmt ist/sind, um lärmrelevante Schwingungen des Bauteils durch ein gegenphasiges Schwingen des Tilgers selektiv auszulöschen oder zumindest selektiv stark zu reduzieren, was so viel bedeutet, dass die Amplitude der lärmrelevanten Schwingungen etwa auf einen Amplitudenwert der im Wesentlichen durch den Schwingungstilger unbeeinflusst bleibenden Nachbarfrequenzen herabgesetzt wird.

Der Effekt der Schwingungstilgung kann somit energetisch auch verstanden werden nicht als Dissipation durch Dämpfung, sondern als Umleitung der unerwünschten Schwingungsenergie, z. B. des Quietschens, auf eine Teilstruktur des Systems. Real ausgeführte Schwingungstilger weisen jedoch immer auch eine Dämpfung auf, sind also Feder-Masse-Dämpfer-Systeme, was sich im Rahmen der Erfindung beispielsweise aus dem viskoelastischen Verhalten von bevorzugt als Feder-/Dämpfungselement(en) eingesetzten Elastomeren ergibt, deren elastische Federwirkung im Schwingungstilger primär ausgenutzt werden soll. Eine Dämpfung kann jedoch - solange sie klein ist - bei der Auslegung gegebenenfalls unberücksichtigt bleiben - im Gegensatz zu beispielsweise in der o. g. VDI-Richtlinie 3833, Blatt 2 exemplarisch beschriebenen, hydraulisch dämpfenden Scherspalt-, Hülsen-, Blatt- oder Bogenfedertilgern, bei denen zur Dämpfung eine Flüssigkeitsverdrängung erfolgt.

Auch einem wie oben ausgeführt ausgebildeten Radreifen allein wird ebenfalls erfinderische Bedeutung beigemessen, wobei die Aussparung(en) für den/die Schwingungstilger mit quadratischem, rechteckigem oder rundem Grundriss und/oder Querschnitt ausgeführt und insbesondere im Fußbereich des Radreifens und/oder seitlich an zumindest einer Stirnseite des Radreifens angeordnet sein kann/können. So ist es beispielsweise vorteilhaft, wenn der Anbau eines Schwingungstilgers am Rad bereits vorgesehen ist, auch wenn vorerst kein solcher montiert wird. Dann kann bedarfsweise problemlos eine Nachrüstung erfolgen, wenn im späteren Betrieb des Fahrzeugs ein Kurvenquietschen auftreten sollte oder zu erwarten ist.

Durch die Einbettung oder Ankopplung der Schwingungstilgermasse(n) in ein Polymer-/Elastomermaterial, welches als Feder-Dämpfer-System dient, sind Schwingungen in alle drei Raumrichtungen, insbesondere aber in axialer Richtung zur effizienten Tilgung der für das Kurvenquietschen ursächlichen axialen Eigenmoden (Eigenfrequenzen), möglich.

Eigenmoden, auch Normalmoden genannt, stellen die Basis dar, um die Schwingungen in einem ungedämpften und frei schwingenden System in harmonischer Näherung zu beschreiben. Die Eigenmoden und Eigenfrequenzen berechnen sich aus den Bewegungsgleichungen des Systems. Die Eigenmoden sind dabei die Eigenvektoren des Gleichungssystems - also gerichtete Größen - und die Eigenfrequenzen die zu den Eigenvektoren gehörenden Eigenwerte - also skalare, d. h. numerische Größen. Die Eigenfrequenzen des Systems sind demgemäß die Frequenzen der Eigenmoden. Die Anzahl der Eigenmoden hängt dabei von der Anzahl der Freiheitsgrade des Systems ab. Es gibt genauso viele linear unabhängige Eigenmoden und maximal so viele Eigenfrequenzen, wie es Freiheitsgrade gibt. Jede Schwingung eines Systems kann als Überlagerung von Eigenmoden beschrieben werden.

Vorzugsweise können ein oder mehrere Schwingungstilger in eine beispielsweise als Nut ausgebildete Aussparung im mittleren Teil des Radreifens von unten formschlüssig eingesetzt bzw. auch eingepresst oder in der Aussparung am Radreifen angekoppelt werden. Die Schwingungstilger bedürfen dabei keinerlei weiterer Vorspannung durch zusätzliche Spanneinrichtungen.

Durch die erfindungsgemäßen Maßnahmen wird/werden der oder mehrere Schwingungstilger integraler Bestandteil des Radreifens, wobei das Gewicht des Radreifens einschließlich eventuell vorhandener, nicht abgefederter Massen, z. B. von außen am Radreifen angebrachten Schallabsorbern, verringert werden kann. Dies liegt daran, dass bei einem erfindungsgemäßen Radreifen mit integrierten Schwingungstilger, dessen Schwingungstilgermasse in einen polymeren Werkstoff eingebettet ist, sich das Gewicht bzw. die Masse nicht zwangsläufig erhöht, sondern - im Gegenteil - sogar reduziert werden kann, da die in dem ausgesparten Einbauraum fehlende Masse des metallischen Radreifens nicht vollständig wieder mit dem ursprünglichen Metall ausgefüllt wird, welches im Vergleich zu dem stattdessen als Feder-/Dämpfermaterial eingesetzten Polymer eine sehr viel höhere Dichte hat.

Zusätzliche Gewichtsreduktionen können erzielt werden, wenn die Schwingungstilgermasse des Tilgers statt aus Stahlwerkstoff aus einem Leichtmetallwerkstoff besteht.

Alternativ kann es aber - wenn hohe Schwingungstilgermassen erforderlich erscheinen - auch möglich sein, die Schwingungstilgermasse aus einem Schwermetallwerkstoff auszuführen.

Durch die Erfindung kann der Anbau von zusätzlichen Schallabsorbern an den Außenseiten der Radreifen zur Dämpfung des Kurvenquietschens entfallen, wobei den Tatsachen Rechnung getragen wird, dass bei gummigefederten Rädern der zur Verfügung stehende Bauraum in der Regel sehr beengt ist, um effektive Schallabsorber anzuordnen, und dass das Rollgeräusch - wie bereits erwähnt - durch gummigefederte Räder schon breitbandig reduziert wird.

Jedoch kann es auch hier vorteilhaft sein, wenn auch ein Anbau eines zusätzlichen Schallabsorbers am Rad bereits vorgesehen ist, selbst dann, wenn vorerst kein Schallabsorber montiert wird. Dann kann je nach Bedarf ohne größere Umstände ein derartiger Absorber nachgerüstet werden.

Ein in den Radreifen integrierter Schwingungstilger bietet des Weiteren gegenüber außen am Radreifen befestigten Schallabsorbern den Vorteil, dass er von äußeren Umwelteinflüssen weitestgehend abgeschlossen untergebracht ist, so dass hier keine Korrosion von Metallkörpern entstehen kann. Es sind folglich vorteilhafterweise auch keine speziellen Maßnahmen zum Korrosionsschutz, wie z. B. Beschichtungen, wie Verzinkungen oder dergleichen, oder die Verwendung von teuren nichtrostenden Edelstählen als Schwingungstilgermassen notwendig.

Die Erfindung erweist sich somit auch unter Berücksichtigung sekundärer Aspekte, die aber ebenfalls bei der Auswahl und Anordnung geeigneter Systeme eine wichtige Rolle spielen, als vorteilhaft, wie zum Beispiel der verfügbare Bauraum, die Nachrüstbarkeit, die Korrosionsfreiheit, die Kollisionsfreiheit und nicht zuletzt der Einfluss auf die Gesamt-Bauteilstruktur, die üblicherweise im Rahmen eines sogenannten Bauteilnachweises zu dokumentieren ist.

Der erfindungsgemäße, insbesondere innenliegende, Schwingungstilger ist wartungsfrei und gegenüber vielen Umwelteinflüssen geschützt eingebaut. Er besitzt damit eine höhere Lebensdauer und verbessert die Betriebssicherheit, da der Schwingungstilger aufgrund seiner Umfassung durch den Radreifen sich während des Betriebes nicht lösen kann, so dass das potentielle Risiko eines Verlusts infolge eines Schlagschadens, wie es bei konventionellen Schwingungsabsorbern besteht, die außenliegend am Radreifen montiert sind, eliminiert wird.

Außerdem ist der erfindungsgemäße, insbesondere innenliegende und in das Schienenfahrzeugrad integrierte Schwingungstilger, nach Verschleiß und damit notwendigem Tausch des Radreifens wiederverwendbar. Auch ist ein erfindungsgemäß eingesetzter Schwingungstilger vollständig recycelbar.

Weitere vorteilhafte Ausgestaltungen der Erfindung ergeben sich aus der folgenden Figurenbeschreibung und den Unteransprüchen.

Es zeigen:

Fig. 1      einen Halb-Radialschnitt durch eine erste Ausführungsform eines erfindungsgemäßen Schienenfahrzeugrades mit ersten Ausführungsformen einer Aussparung und eines in den Radreifen integrierten Schwingungstilgers,

Fig. 2 bis 6      Teil-Radialschnitte durch weitere Ausführungsformen eines erfindungsgemäßen Schienenfahrzeugrades ohne Schwingungstilger, jedoch mit verschiedenartig ausgestalteten Aussparungen,

Fig. 7 bis 13      Teil-Radialschnitte durch weitere Ausführungsformen eines erfindungsgemäßen Schienenfahrzeugrades mit verschiedenartig ausgestalteten Aussparungen und integrierten Schwingungstilgern,

Fig. 14     exemplarisch, eine diagrammatische Darstellung zur Veranschaulichung des frequenzabhängigen Schwingungsverhalten eines ungedämpften und eines gedämpften herkömmlichen Schienenrades,

Fig. 15     exemplarisch, eine schematische Darstellung zur Veranschaulichung der Wirkungsweise eines Schwingungstilgers und

Fig. 16     exemplarisch, ein Diagramm zur Frequenzabhängigkeit von Übertragungsfunktionen mit und ohne Schwingungstilger sowie mit verschiedenartiger Dämpfung,

Fig. 17     einen Teil-Radialschnitt durch eine weitere Ausführungsform eines erfindungsgemäßen Schienenfahrzeugrades mit einer speziell ausgestalteten Aussparung.

In den verschiedenen Figuren der Zeichnung sind gleiche Teile stets mit denselben Bezugszeichen versehen, so dass sie nachfolgend in der Regel auch nur einmal beschrieben werden.

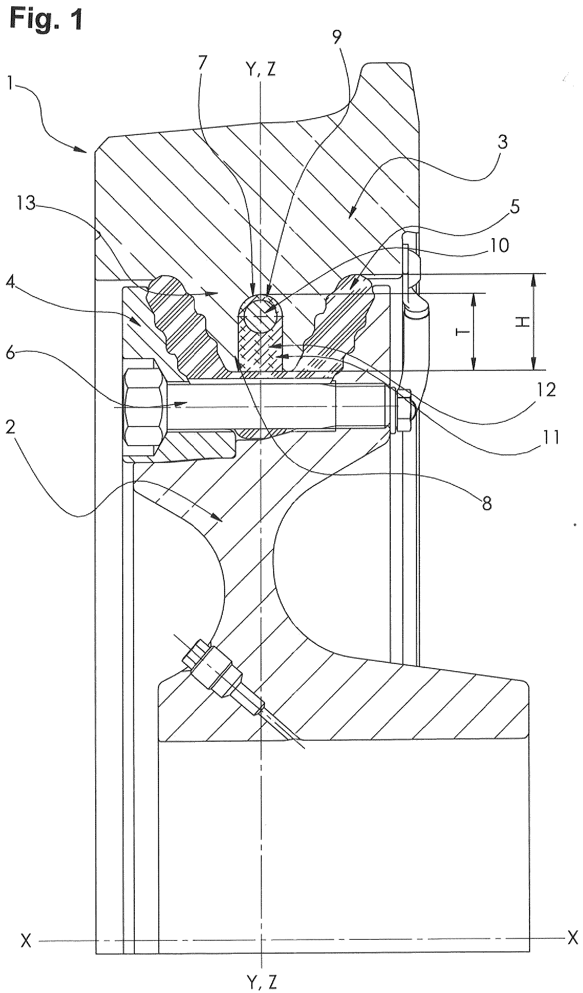

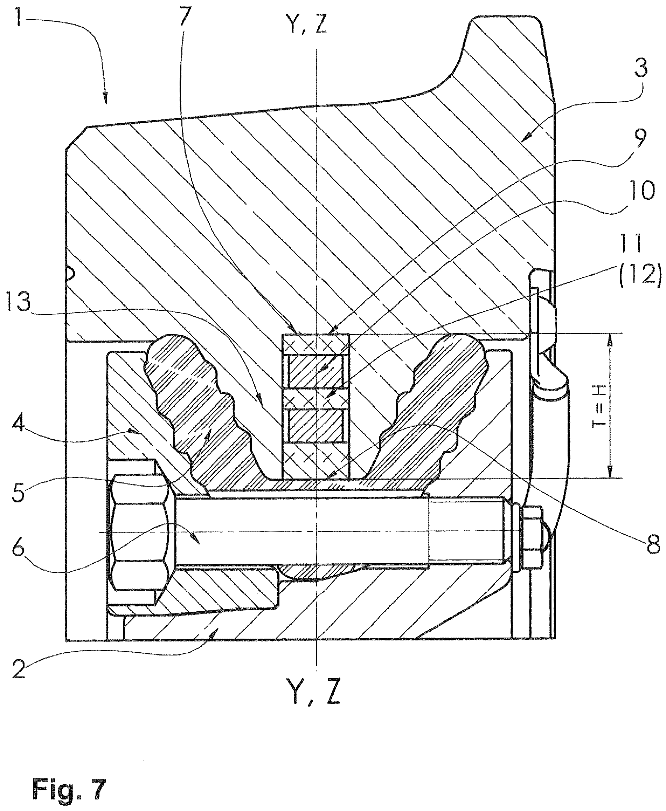

Fig. 1 zeigt - wie erwähnt - einen Halb-Radialschnitt durch eine erste Ausführungsform eines erfindungsgemäßen Rades 1. Das in Fig. 1 - aber auch in den weiteren Ausführungsformen gemäß den Figuren 7 bis 13 sowie 17 - dargestellte mehrteilige gummigefederte Schienenfahrzeugrad 1 umfasst mindestens einen zwischen einem Radkörper 2 und einem Radreifen 3 angeordneten, der Federung und Dämpfung dienenden Gummiring 5 oder entsprechend mehrere einzelne Gummielemente 5 aus Elastomerwerkstoff, wobei diese(r) mit einem Spannring 4 zwischen dem Radkörper 2 und dem Radreifen 3 verspannt ist/sind und der Spannring 4 seinerseits mit Befestigungselementen 6 am Radkörper 2 lösbar befestigt ist. Das Bezugszeichen 8 bezeichnet einen Fußbereich des Radreifens.

Erfindungsgemäß weist der Radreifen 3 eine oder mehrere, insbesondere als Nut(en) ausgebildete, Aussparung(en) 7 auf, in der Schwingungstilger 9, bestehend aus einer oder mehreren Schwingungstilgermasse(n) 10 und aus einem oder mehreren Feder-/Dämpfungselement(en) 11, angekoppelt bzw. eingebettet sind. Das Bezugszeichen 12 bezeichnet dabei das polymere, insbesondere elastomere, Material eines Feder-/Dämpfungselementes 11.

Gemäß den erfindungsgemäßen Merkmalen wird jeder Schwingungstilger 9 integraler Bestandteil des Radreifens 3, so dass sogar eine gegebenenfalls vorhandene, figürlich nicht dargestellte, unabgefederte Masse, z. B. eines außen am Radreifen 3 angebrachten breitbandig wirkenden Schallabsorbers, reduziert und damit das Gewicht des Radreifens 3 verringert werden kann.

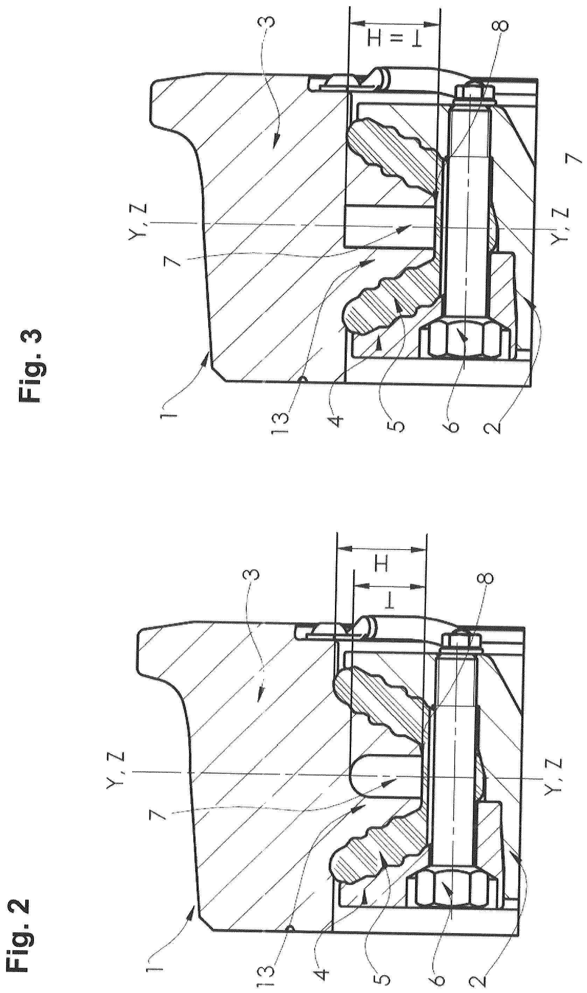

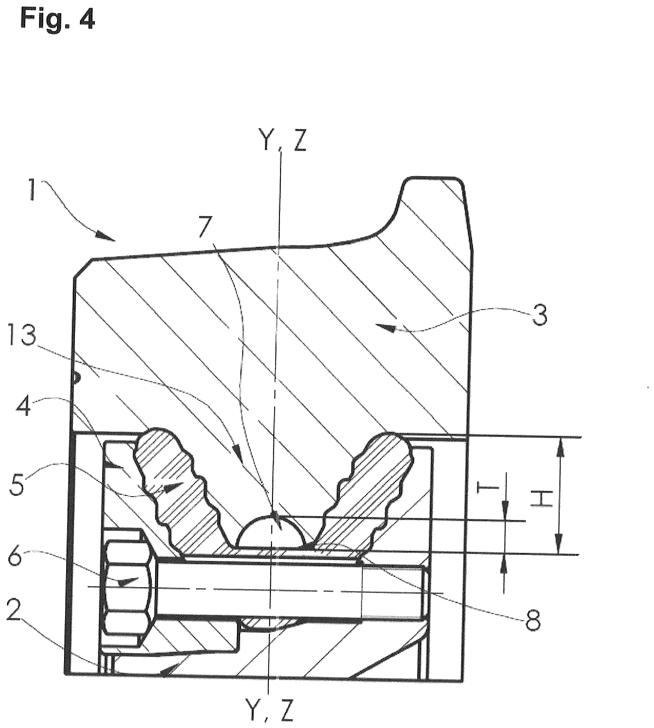

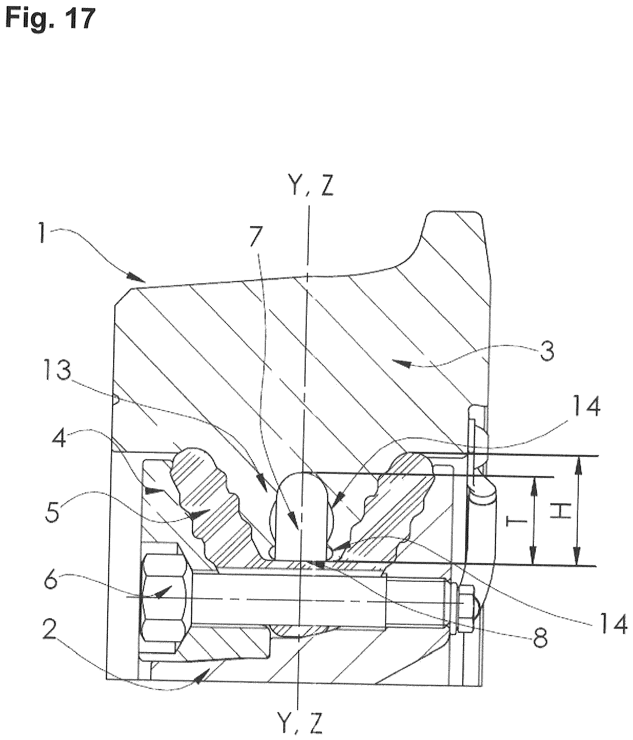

Die in den Figuren 2 bis 6 sowie 17 dargestellten Ausführungsformen des erfindungsgemäßen mehrteiligen gummigefederten Schienenfahrzeugrades 1 zeigen dieses jeweils ohne Schwingungstilger 9, jedoch mit verschiedenen Varianten der Aussparung(en) 7 zur Aufnahme derselben. Die in Fig. 2 dargestellte Form der Aussparung 7 stimmt dabei mit derjenigen der in Fig. 1 und 17, und die in Fig. 3 dargestellte Form der Aussparung 7 stimmt mit denjenigen der jeweils in Fig. 7 bis 11 dargestellten überein.

Die Ausführungsgeometrie der Aussparung(n) 7 kann im Detail auch selbst noch zusätzlich mit Nuten oder Aussparungen in ihrer Wand ausgeführt werden, wie z. B. mit umlaufende Nuten oder balligen Wandungen, die als Fixierelemente 14 den Schwingungstilger 9 formschlüssig in seiner Position festsetzen. Dies wird durch Fig. 17 veranschaulicht.

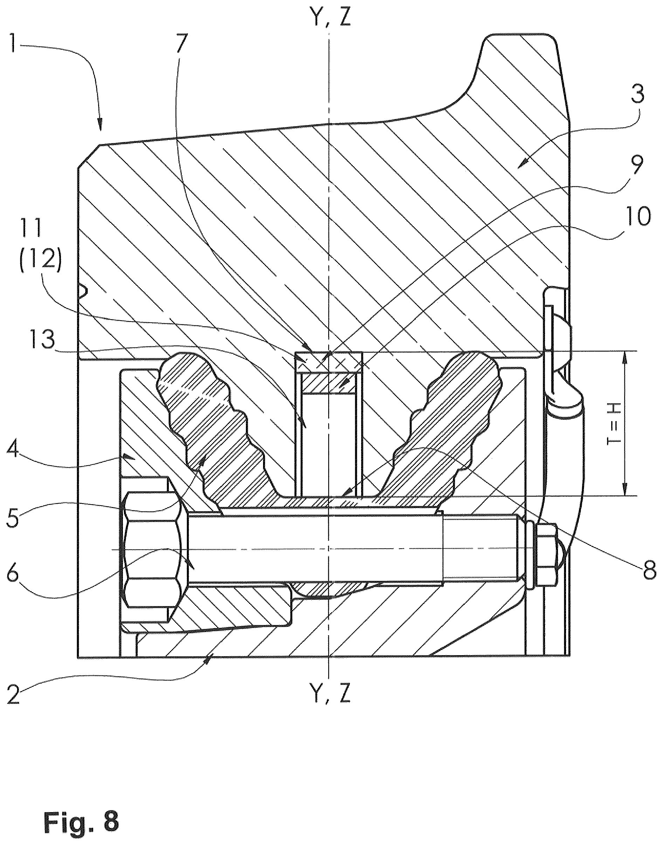

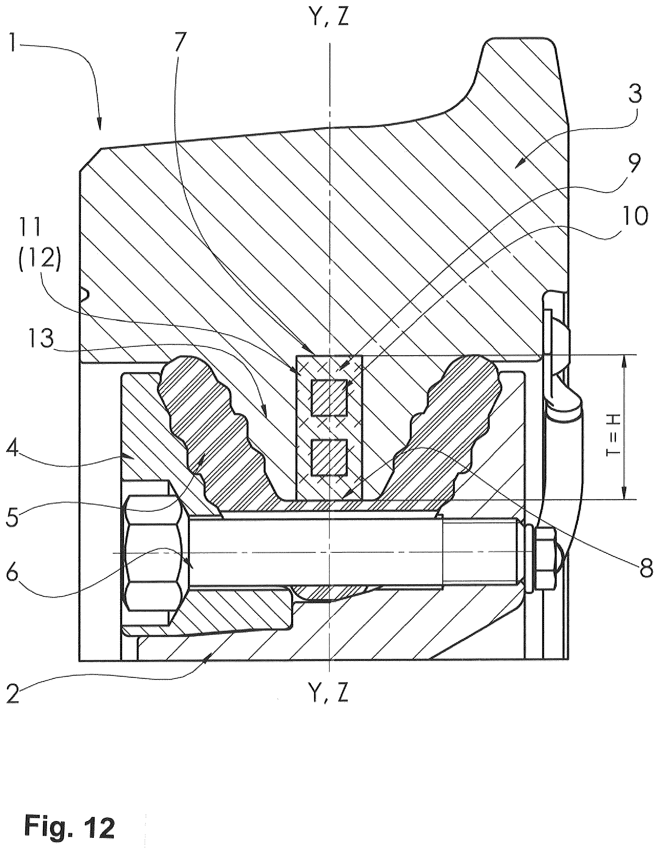

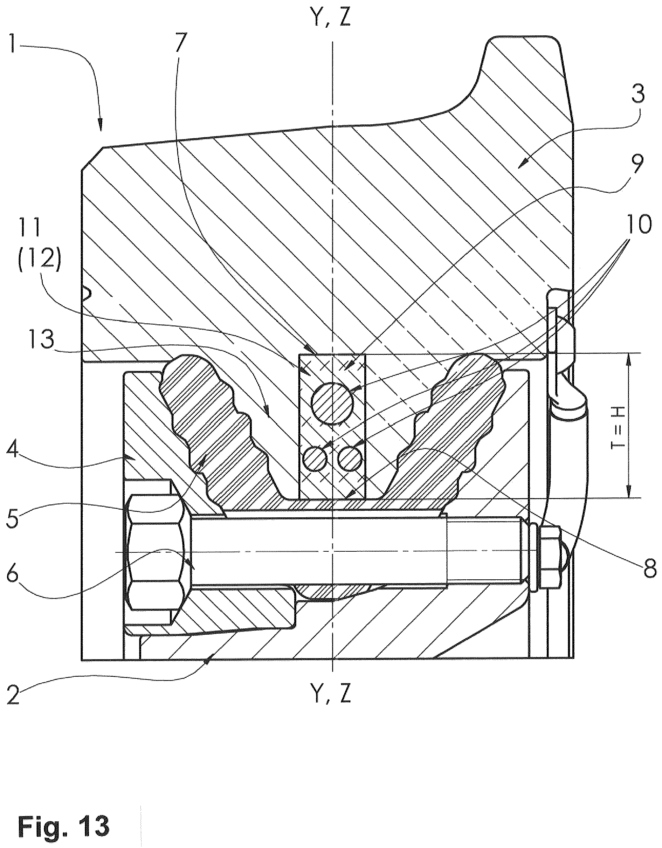

Die Schwingungstilgermasse(n) 10 der/des Schwingungstilger(s) 9 kann/können aus Stahl, Leicht- oder Schwermetallwerkstoffen bestehen und mit quadratischem, rechteckigem oder rundem Grundriss und/oder Querschnitt, wie als Würfel (Fig. 12), allgemein als Quader (Fig. 7 bis 12), wie insbesondere plattenförmig (Fig. 8 bis 11), und/oder als Kugel(n) bzw. Ring(e) (Fig. 1 und 13) ausgeführt sein.

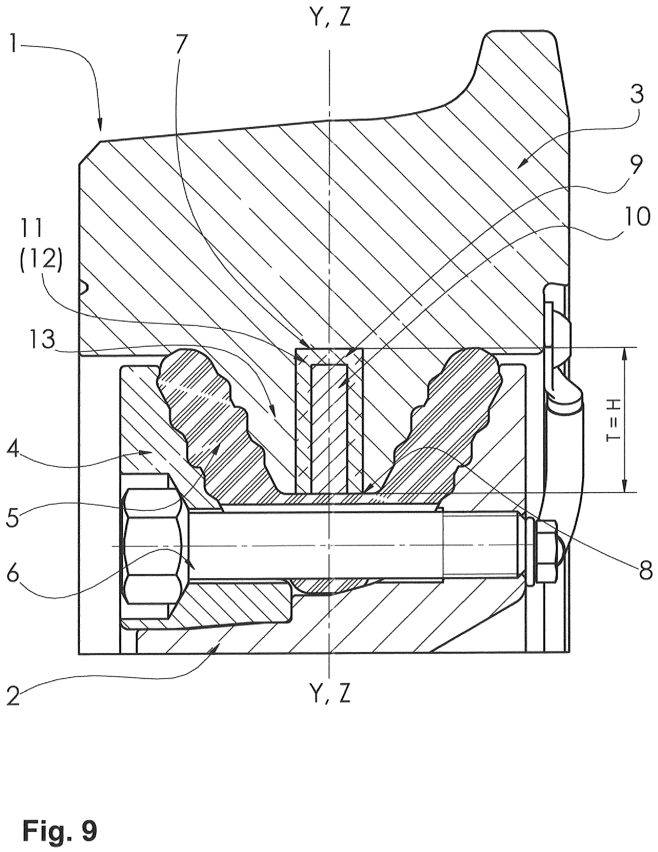

Plattenförmige Schwingungstilgermassen 10 können längs (Fig. 9 bis 11) oder quer (Fig. 8) zu den jeweiligen Achsen Z-Z der Ausnehmungen 7 bzw. der Schwingungstilger 9 angeordnet sein.

Die Schwingungstilgermassen 10 und die Feder-/Dämpfungselemente 11 können dabei lamellenartig aneinander oder übereinander (Fig. 7, 10, 11) liegen.

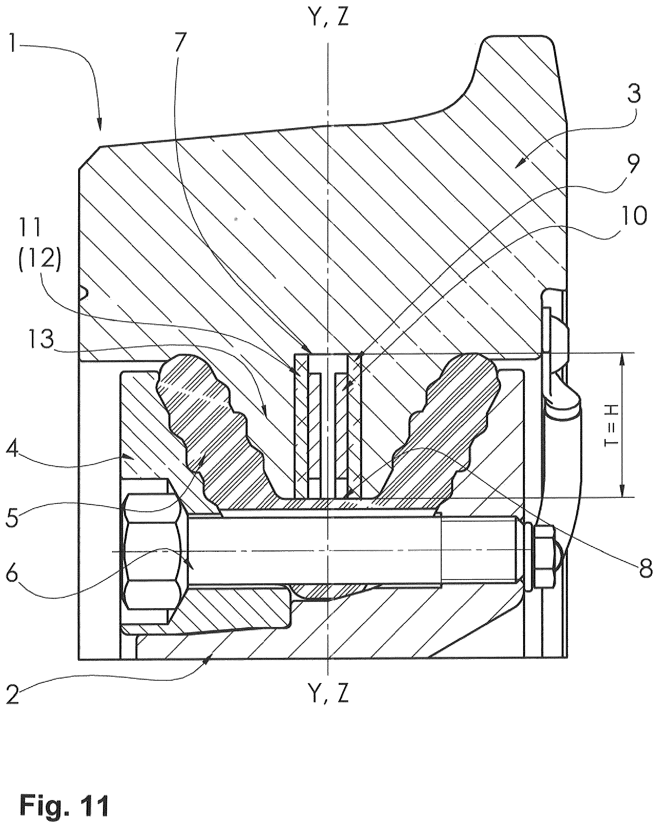

Wie Fig. 8 und 11 zeigen, können der/die Schwingungstilger 9, insbesondere deren Feder-/Dämpfungselement(e) 11 - zumindest abschnittsweise - auch als Hohlkörper ausgeführt sein, was unter dem Gesichtspunkt eines optimalen Masse-Leistungs-Verhältnisses vorteilhaft ist.

In den Ausführungsformen gemäß Fig. 1, 12 und 13 sind die Schwingungstilgermassen 10 vollständig in das elastomere Material 12 der Feder-/Dämpfungselemente 11 eingebettet. Sie können dadurch vorteilhafterweise zur Schwingungstilgung in alle drei Raumrichtungen schwingen.

Bei den erwähnten mehreren einzelnen Gummielementen 5 kann es sich beispielsweise um mindestens zwei, vorzugsweise auch mehr, separate Kreisringsegmente handeln, die insbesondere seitlich eines innen umlaufenden Steges 13 des Radreifens 3, dessen Fußbereich mit dem Bezugszeichen 8 bezeichnet ist, den Umfang des Steges 13 überdeckend, gleichmäßig verteilt sind.

Dabei kann - wie in Fig. 1 bis 13 und 17 dargestellt - das elastomere Volumen des Gummiringes 5 oder der mehreren einzelnen Gummielemente 5 insbesondere spiegelsymmetrisch, vorzugsweise V-förmig, in Bezug auf eine Querschnittsachse Y-Y des Radreifens 3 verteilt sein. Sie bilden somit Dämpfungsmittel, die in einem U-bzw. V-förmig ringförmigem Zwischenraum zwischen Radkörper 2, Radreifen 3 und Spannring 4 angeordnet sind, wie dies von einem gattungsgemäßen Schienenfahrzeugrad her bekannt ist, und können mit der Radachse X-X einen Winkel im Bereich von 15° bis ≤ 90°, vorzugsweise einen Winkel von 60°, einschließen.

Die erfindungsgemäß vorgesehenen, insbesondere als Nut(en) ausgebildete(n), Aussparung(en) 7, in die jeweils ein Schwingungstilger 9 einzusetzen ist, können in bevorzugter Ausbildung ausgehend vom Fußbereich 8 am Umfang des innen umlaufenden Steges 13 des Radreifens 3 eingebracht sein. Im Montagefall können dann der/die jeweils in die Aussparung(en) 7 eingebrachten Schwingungstilger 9 insbesondere mittig - mit oder ohne einen Abstandsspalt - auf dem vorzugsweise V-förmig ausgebildeten Gummiring 5 oder den mehreren einzelnen Gummielementen 5 fußen, wobei ihre Achse(n) Z-Z insbesondere mit der senkrecht zur Radachse X-X verlaufenden Symmetrieachse Y-Y des/-der Dämpfungsmittel(s), also des Gummiringes 5 bzw. der Gummielemente 5, koinzidieren.

Eine Tiefe T der Aussparung(en) 7 - gemessen ausgehend vom Fußbereich 8 am Umfang des innen umlaufenden Steges 13 des Radreifens 3 - sollte dabei jeweils vorteilhafterweise nicht größer sein als 120 Prozent, vorzugsweise nicht größer als 100 Prozent, einer radialen Höhe H, über die sich im Montagefall - ausgehend vom Fußbereich 8 am Umfang des innen umlaufenden Steges 13 des Radreifens 3 - ein/der vorzugsweise V-förmig ausgebildete Gummiring 5 oder (die) mehrere(n) einzelne(n) Gummielementen 5 entlang des Radreifens 3 erstrecken.

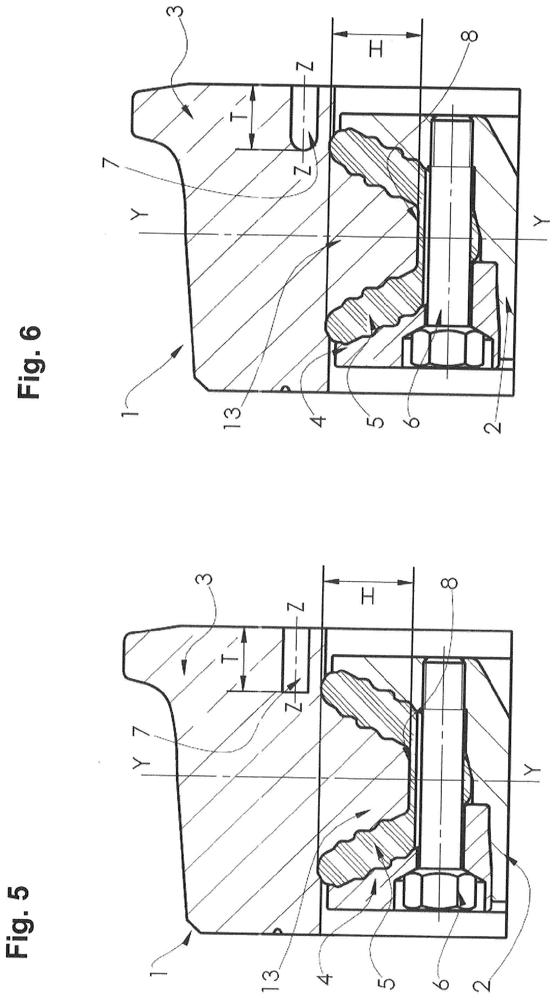

Alternativ bestimmt sich - wie in Fig. 5 und 6 gezeigt - eine Tiefe T der Aussparung(en) 7 ausgehend von der Stirnfläche des Radreifens 3. In den Ausführungen gemäß Fig. 5 und 6 verläuft die Achse Y-Y der Aussparung(en) 7 - abweichend von den übrigen Ausführungen - achsparallel zur Radachse X-X. In den seitlich des Schienenrades 1 eingebrachten, insbesondere jeweils als Nut im Radreifen 3 ausgeführten, Aussparung(en) 7 ist mit Vorteil ein im Querschnitt als Kreisring ausgeführter Schwingungstilger 9 einkoppelbar.

Die Aussparung(en) 7 für den/die Schwingungstilger 9 kann/können in Anpassung an dessen/deren Form ebenfalls mit quadratischem, rechteckigem oder rundem Grundriss und/oder Querschnitt ausgeführt und generell insbesondere im Fußbereich 8 des Radreifens 3 (Fig. 1 bis Fig. 4, Fig. 7 bis Fig. 13 und Fig. 17) und/oder aber auch seitlich an den Stirnseiten des Radreifens 3 (Fig. 5 und 6) angeordnet sein.

In den Ausführungsformen gemäß Fig. 1, 2, 4, 6 sowie 17 haben die Aussparung(en) 7 einen runden Boden, während der Boden der Aussparung(en) 7 in den Ausführungsformen gemäß Fig. 3 und Fig. 5 sowie gemäß Fig. 7 bis Fig. 12 eben ausgebildet ist.

Bevorzugt kann/können der/die Schwingungstilger 9 jeweils den kompletten Einbauraum der Aussparung(en) 7 ausfüllen und dadurch Korrosionseinflüsse durch Umwelteinwirkung verhindern, wie dies Fig. 1 sowie Fig. 7, 9 und 10 und auch Fig. 12 und 13 zeigen.

Wie das/die Dämpfungselement(e) 5 kann/können auch der/die Schwingungstilger 9 ringförmig umlaufend ausgebildet sein oder aus einzelnen Segmenten bestehen.

In der oben genannten Literaturstelle: Thomas Gerlach et al.: Methods for developing low-noise wheels in terms of rolling noise, curve squeal and ground vibrations, 20th International Wheelset Congress, Chicago, 2023, May 8-11 ist beschrieben, wie die Eigenfrequenzen von herkömmlichen Schienenfahrzeugrädern bestimmt werden können. Dazu wird das Rad mit einem Impulshammer angeregt und einzelne, an definierten Stellen des Rades positionierte Beschleunigungsaufnehmer zur Messung der Reaktion verwendet. Die erhaltenen Übertragungsfunktionen werden dann analysiert, um die konkreten modalen Parameter des Rades abzuleiten. Weitere Einzelheiten dazu sind auch beschrieben im bei der TIB Hannover veröffentlichten Abschlussbericht "Stardamp" von B. Asmussen, M. Starnberg, B. Betgen, P. Bouvet, A. Martinot-Lagarde, F. Margiocchi, F. Aubin, D. Thompson, G. Squicciarini, M. Toward, T. Gerlach, C. Kemp-Lettkamp, H. Venghaus, P. Kitson, L. Pesqueux, A. Carrillo Zanuy, C. Sánchez Martin, G. de Ana Rodriguez, F. Demilly: "Standardization of damping technologies for the reduction of railway noise", 27.05.2013, auf den die genannte Literaturstelle verweist.

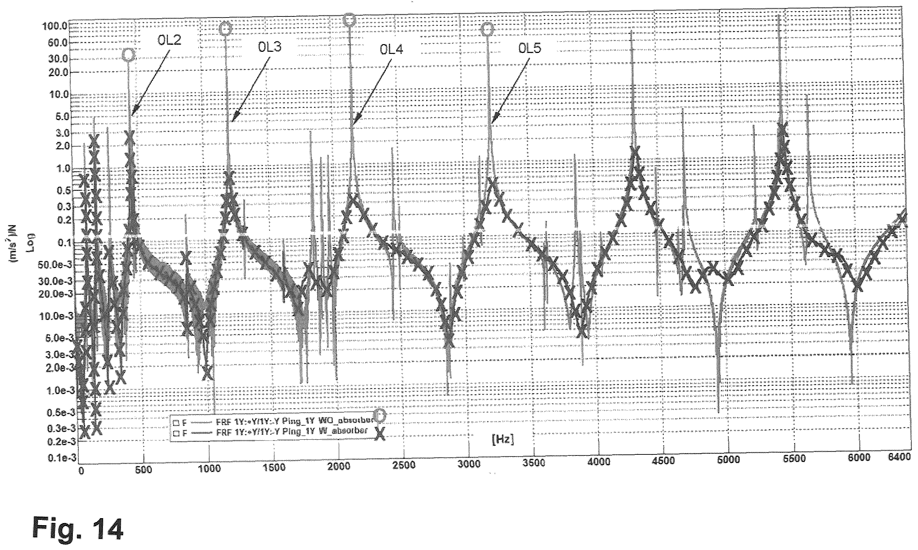

Wie erwähnt, ist in Fig. 14 vergleichend das frequenzabhängige Schwingungsverhalten eines ungedämpften ("wo_absorber", Volllinie) und das eines mittels eines bekannten breitbandig wirkenden Schallabsorbers gedämpften Schienenrades ("w_absorber", Linie ✕–✕–✕) dargestellt. Die Eigenmoden (OL2 bis OL5) sind für das Schienenrad ohne Schallabsorber mit "O" gekennzeichnet. Es ist ersichtlich, dass der bekannte Schallabsorber hauptsächlich die modale Dämpfung (Höhe der Peaks OL2 bis OL5) und weniger die Frequenzlage der Schwingungsmaxima beeinflusst. Mit den erhaltenen Informationen und einem Vergleich mit einer mittels der Finite-Elemente-Methode (FEM) berechneten Modalbasis ist es möglich, die Modenformen und die Resonanzfrequenzen der Hauptmoden, die für die einzelnen Geräuscharten, wie für das Rollgeräusch und für das Kurvenquietschen, entscheidend sind, zu bestimmen.

Im Anschluss geht es maßgeblich darum, die in der Grafik mit OL2 bezeichnete Eigenschwingungsmode des Schienenrades 1 zumindest zu reduzieren bzw. optimalerweise ganz zu tilgen, und gegebenenfalls dasselbe zusätzlich oder alternativ auch für die in der Grafik mit OL3 bezeichnete Eigenschwingungsmode zu erreichen. Die Moden OL2 und OL3 sind nämlich die axialen Moden, die maßgeblich das Kurvenquietschen, z. B. bei Straßenbahnen, verursachen. Weitere Moden, wie z. B. OL4, können bedarfsweise im Rahmen der Erfindung natürlich ebenfalls reduziert bzw. getilgt werden. Die signifikanten Eigenfrequenzen liegen dabei bei gummigefederten Rädern im Bereich von ca. 800 Hz (600 Hz bis 900 Hz) für OL2 und von ca. 2000 Hz (1600 Hz bis 2200 Hz) für OL3.

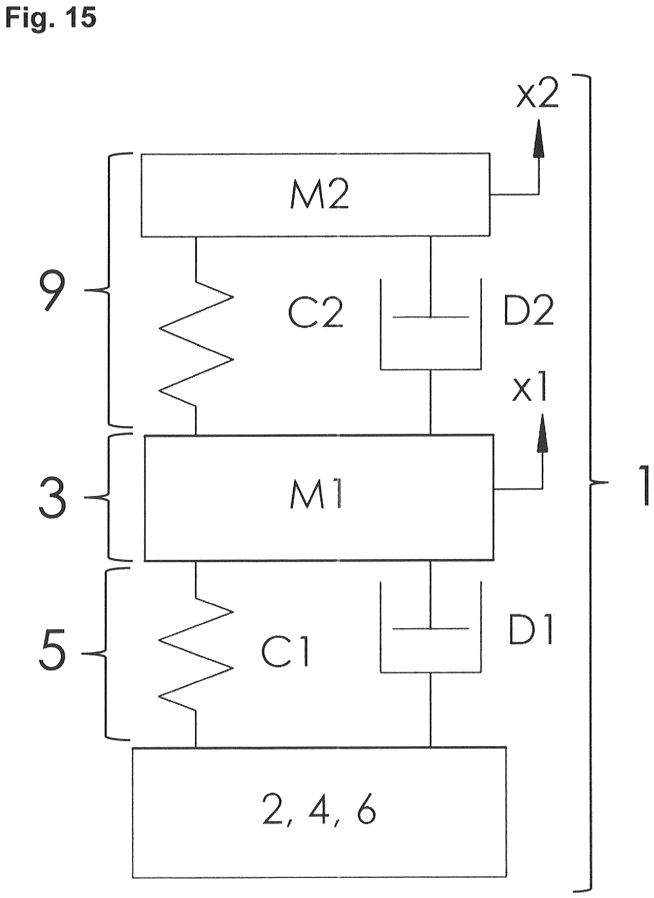

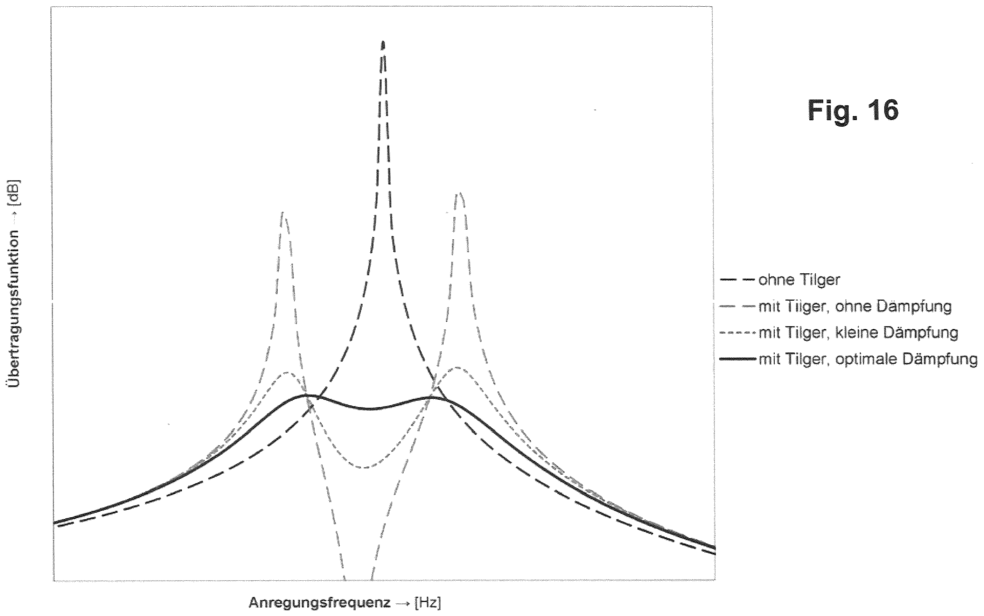

Fig. 14 veranschaulicht dabei, dass ein bekannter, breitbandig wirkender Schallabsorber die Schwingungsamplituden bei den kritischen Frequenzen zwar verringert, aber nicht beseitigt. Die entsprechenden Peaks sind auch nach Dämpfung - zwar in geringerer Höhe - immer noch vorhanden. Durch die erfindungsgemäß eingesetzten Schwingungstilger 9 ist eine weitestgehende Eliminierung im Gegensatz dazu aber vorteilhafterweise möglich, was nachfolgend anhand der Figuren 15 und 16 erläutert wird.

Fig. 15 stellt dabei ein unter Verwendung von Modellkörpern gewonnenes - Hooke'scher Körper für das Federverhalten und Newton'scher Körper für das Dämpfungsverhalten - schematisch vereinfachtes und abstrahiertes Schaltbild (Ersatzmodell) für ein erfindungsgemäßes mehrteiliges gummigefedertes Schienenfahrzeugrad 1 dar.

Das erfindungsgemäße Schienenfahrzeugrad 1 umfasst den Radkörper 2, den Spannring 4 inklusive der Befestigungselemente 6, den Radreifen 3 mit der modalen Masse M1, den Gummiring 5 oder Gummielemente 5 mit der Feder C1 und den Dämpfer D1, wie in Fig. 15 modellhaft abgebildet ist.

Des Weiteren umfasst das erfindungsgemäße Schienenfahrzeugrad 1 die Masse M2, die Feder C2 und den Dämpfer D2, welche einen Schwingungstilger 9 mit Schwingungstilgermasse(n) 10 und mit Feder-/Dämpfungselement(en) 11 modellhaft abbildet.

Die Wirkungen eines Elastomers als Feder-/Dämpfungselement 11 ist dabei modellhaft zerlegt in einen Hooke'schen Körper (Feder C2) und einen Newton'schen Körper (Dämpfer D2).

Im Gegensatz zur Realität in der Praxis veranschaulicht Fig. 15 nur ein lineares, also ein eindimensionales Schwingen (Pfeilrichtungen x1 und x2). In der VDI-Richtlinie VDI 3833, Blatt 2 "Schwingungsdämpfer und Schwingungstilger" (Dezember 2006) ist im Anhang beschrieben, wie die Reduzierung eines Mehrmassensystems auf ein derartiges Ersatzsystem mit einem Freiheitsgrad erfolgen kann. Erfindungsgemäß können Frequenz, Masse M2, Feder C2 und Dämpfung D2 insbesondere gemäß dem Modell eines sogenannten, translatorisch wirkenden Feder-Masse-System für passive Schwingungstilger optimal aufeinander abgestimmt werden.

Die genannte Norm beschreibt dabei die Vorgehensweise, wie auf der Grundlage derartiger Modelle wie in Fig. 15 (oder - je nach schwingendem System - auch anderer Modelle) die erforderlichen Größen von Masse M2, Feder C2 (und Dämpfer D2) des Schwingungstilgers 9 ausgelegt werden können, damit dieser wirklich auch als solcher wirkt, indem er die zu eliminierenden Schwingungen tatsächlich möglichst vollständig auslöscht.

Die Basisforderung ist diesbezüglich, dass Masse M2, Federkonstante C2 und Größe der Dämpfung D2 des Schwingungstilgers 9 so zu dimensionieren sind, dass die Eigenfrequenz des Schwingungstilgers 9 mit der zu tilgenden Eigenfrequenz, insbesondere also von OL2 und/oder OL3, des Schienenrades 1 bzw. des Radreifens 3 übereinstimmt.

Für die Eigenfrequenz F2 des Schwingungstilgers 9 gilt dabei:

$$f_2 = ( 1 / 2\pi ) * \sqrt{C2/M2}$$

Die Charakteristik der Feder C2 (Federkonstante) wird dabei beispielsweise durch die Geometrie und den Realteil des dynamischen Elastizitätsmoduls (YOUNG-Modul) eines als Feder-/Dämpfungselement 11 eingesetzten Elastomers bestimmt.

Die Feder C2 kann dabei ein beispielsweise aus NR, EPDM, oder vorzugsweise Silicon, z. B. VMQ, bestehendes Elastomerelement mit entsprechender Steifigkeit C2 und Dämpfung D2 sein. Dabei können bevorzugt die geometrischen Abmessungen entsprechend den Figuren 1 oder 7 bis 13 realisiert werden.

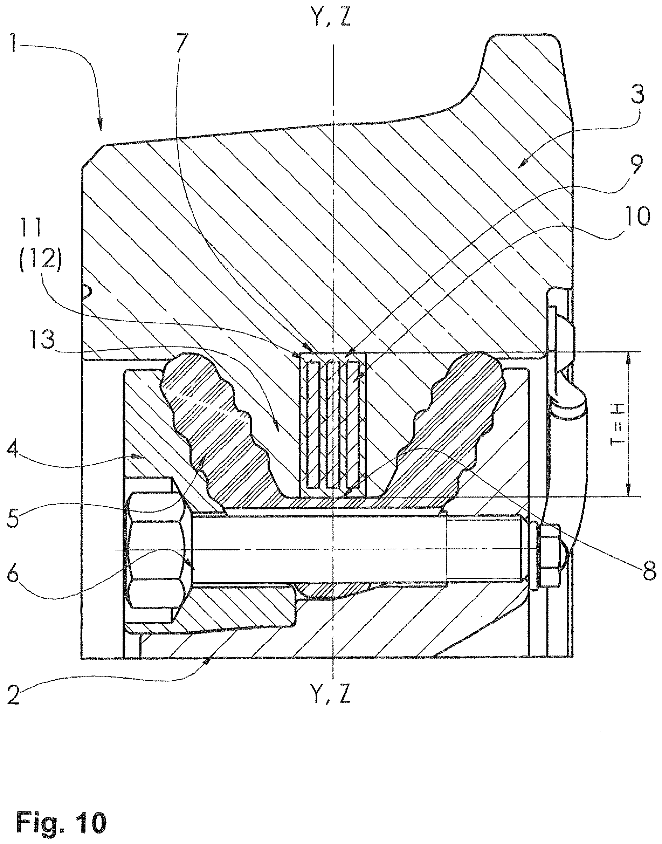

Je nach geometrischer Ausbildung - z. B. bei alternierenden Schwingungstilgermasse- und Feder-/Dämpfungselement-Schichten 10/11, wie z. B. in Fig. 10 gezeigt - kann allerdings auch die Schwingungstilgermasse 10 einen Beitrag zur Wirkung der Feder C2 liefern, was gegebenenfalls durch entsprechende, dem Fachmann an sich bekannte Berechnungen zu berücksichtigen ist.

Für den Dämpfungsgrad des Schwingungstilgers 9 gilt:

$$DG_2 = D2 / (2 * \sqrt{C2 * M2})$$

.

Die Charakteristik der Dämpfung D2 wird dabei beispielsweise durch die Geometrie und den Imaginärteil (viskoser Anteil) des dynamischen Elastizitätsmoduls eines als Feder-/Dämpfungselement 11 eingesetzten Elastomers 12 bestimmt.

Bestimmungsmethoden zur Messung des dynamischen Elastizitätsmoduls sind dem Fachmann an sich bekannt und im Rahmen der Erfindung unkritisch. Auch können entsprechende Werte oftmals Datenblättern für erfindungsgemäß einzusetzende Elastomermaterialien 12 entnommen werden.

Die Masse M2 (insbesondere Schwingungstilgermasse 10) richtet sich nach der modalen Masse M1 und sollte im optimalen Fall höchstens bei etwa 10 % der modalen Masse M1 des Radreifens 3 des erfindungsgemäßen Schienenfahrzeugrades 1 liegen, muss aber aus Gewichts- und Platzgründen oft niedriger - beispielsweise im Bereich von 5 % bis 8 % - gewählt werden.

Im Ergebnis stellt sich dann das durch Fig. 16 visualisierte Verhalten der Schall-Übertragungsfunktion T (in dB) ein. Auf der Abszisse (Frequenz in Hz) sind dabei keine numerischen Werte angegeben, da diese sich wahlweise entsprechend der konkreten Auslegung der/des Schwingungstilger(s) 9 in gewünschten Bereichen, also insbesondere im Bereich der Eigenfrequenzen der Moden OL2 und/oder OL3, ergeben können. Die Grafik zeigt vergleichend die Frequenzabhängigkeit von Übertragungsfunktionen T:

- ohne Schwingungstilger 9 und

- mit Schwingungstilger 9 ohne Dämpfung (D2 = 0, zwei Peaks mit vergleichsweise - verglichen mit den Dämpfungsvarianten - größerer Amplitude, aber mit kleinerer Amplitude als ohne Schwingungstilger 9) sowie

- mit Schwingungstilger 9 mit kleiner Dämpfung (D2 > 0, zwei Peaks mit vergleichsweise noch kleinerer Amplitude als ungedämpft) und schließlich

- mit Schwingungstilger 9 mit optimaler Dämpfung (D2$_{opt}$ > 0, wobei die zwei Peaks nahezu zu einem einzigen, etwas verbreiterten Peak verschmolzen sind, dessen Amplitudenhöhe nur noch ein Bruchteil derjenigen der Amplitude ohne Schwingungstilger 9 ist.

Um endgültig optimale Werte für die Parameter M2, C2 und D2$_{opt}$ zu bestimmen, können neben der bereits im Zusammenhang mit der Bestimmung der Eigenfrequenzen des Schienenrades 1 erwähnten FEM ggf. auch andere Rechenmethoden, wie z. B. iterative Rechenmethoden, eingesetzt werden. Zur Validierung der berechneten Parameter können Messungen mittels Anschlagversuchen an Prototyenrädern mit und ohne Schwingungstilger durchgeführt werden.

**Bezugszeichenliste**

| | |
|---|---|
| 1 | Mehrteiliges gummigefederten Schienenfahrzeugrad |
| 2 | Radkörper von 1 |
| 3 | Radreifen von 1 |
| 4 | Spannring von 1 |
| 5 | Gummiring, Gummikörper von 1 |
| 6 | Befestigungselement |
| 7 | Aussparung in 3, Nut |
| 8 | Fußbereich von 3 |
| 9 | Schwingungstilger |
| 10 | Schwingungstilgermasse(n) von 9 |
| 11 | Feder-/Dämpfungselement(e) von 9 |
| 12 | Polymer-/Elastomermaterial von 9 bzw. 11 |
| 13 | Umlaufender Steg von 3 |
| 14 | Fixierelement von 7 |

| | |
|---|---|
| C1 | Feder(größe) von 5, Hooke'scher Modellkörper |
| C2 | Feder(größe) von 9, Hooke'scher Modellkörper |
| D1 | Dämpfer(größe) von 5, Newton'-scher Modellkörper |
| D2 | Dämpfer(größe) von 9, Newton'-scher Modellkörper |
| H | radiale Höhe von 5 an 3 |
| M1 | Modale Masse von 3 ohne Masse M2 |
| M2 | Masse von 9, insbesondere von 10 |
| OL2, OL3, OL4 | Schwingungsmoden von 3 |
| T | Tiefe von 7 in 3 |
| X-X | Radachse von 1 (Fig. 1) |
| Y-Y | Symmetrieachse von 5 |
| Z-Z | Mittenachse von 7, 9 |

**Patentansprüche**

1. Mehrteiliges gummigefedertes Schienenfahrzeugrad (1) mit mindestens einem zwischen einem Radkörper (2) und einem Radreifen (3) angeordneten Gummiring (5) oder mit mehreren zwischen einem Radkörper (2) und einem Radreifen (3) angeordneten einzelnen Gummielementen (5), wobei diese(r) mittels eines Spannringes (4) zwischen dem Radkörper (2) und dem Radreifen (3) verspannt ist/sind und der Spannring (4) mittels Befestigungselementen (6) am Radkörper (2) lösbar befestigt ist, **dadurch gekennzeichnet, dass** der Radreifen (3) eine oder mehrere Aussparung(en) (7) aufweist, an oder in der/denen mindestens ein Schwingungstilger (9), bestehend aus einer oder mehreren Schwingungstilgermasse(n) (M2, 10) und aus einem oder mehreren Feder-/Dämpfungselement(en) (11, C2/D2), angekoppelt oder eingebettet sind, wobei die Schwingungstilgermasse(n) (M2, 10) der/des Schwingungstilger(s) (9) nicht größer ist/sind als 10 % der modalen Masse (M1) des Radreifens (3) des Schienenfahrzeugrades (1).

2. Mehrteiliges gummigefedertes Schienenfahrzeugrad (1) nach Anspruch 1, **dadurch gekennzeichnet, dass** die Aussparung(en) (7) mit quadratischem, rechteckigem oder rundem Grundriss und/oder Querschnitt, bevorzugt jeweils als Nut, ausgeführt ist/sind.

3. Mehrteiliges gummigefedertes Schienenfahrzeugrad (1) nach Anspruch 1 oder 2, **dadurch gekennzeichnet, dass** in der/den Aussparung(en) (7) formschlüssig wirkende Fixierelemente (14), wie Nuten oder ballige Wandungen, vorgesehen sind, die den/die Schwingungstilger (9) in Position halten.

4. Mehrteiliges gummigefedertes Schienenfahrzeugrad (1) nach einem der Ansprüche 1 bis 3, **dadurch gekennzeichnet, dass** die Aussparung(en) in einem Fußbereich (8) des Radreifens (3) und/oder seitlich an zumindest einer Stirnseite des Radreifens (3) angeordnet ist/sind.

5. Mehrteiliges gummigefedertes Schienenfahrzeugrad (1) nach einem der Ansprüche 1 bis 4, **dadurch gekennzeichnet, dass** der/die in die Aussparung(en) (7) eingebrachte(n) Schwingungstilger (9) - mit oder ohne einen Abstandsspalt - auf dem vorzugsweise V-förmig ausgebildeten Gummiring (5) oder den mehreren einzelnen Gummielementen (5) fußen, wobei insbesondere die Achse(n) (Z-Z) der Aussparung(en) (7) und der in sie eingebrachte(n) Schwingungstilger (9) mit einer senkrecht zur Radachse (X-X) verlaufenden Symmetrieachse (Y-Y) des Gummiringes (5) oder der Gummielemente (5) koinzidiert/koinzidieren.

6. Mehrteiliges gummigefedertes Schienenfahrzeugrad (1) nach einem der Ansprüche 1 bis 5, **dadurch gekennzeichnet, dass** eine Tiefe (T) der Aussparung(en) (7) - gemessen ausgehend von einem/dem Fußbereich (8) am Umfang eines innen umlaufenden Steges (13) des Radreifens (3) - jeweils nicht größer ist als 120 Prozent, vorzugsweise nicht größer als 100 Prozent, einer radialen Höhe (H), über die sich im Montagefall ein/der vorzugsweise V-förmig ausgebildete Gummiring (5) oder die mehreren einzelnen Gummielemente (5) entlang des Radreifens (3) erstrecken.

7. Mehrteiliges gummigefedertes Schienenfahrzeugrad (1) nach einem der Ansprüche 1 bis 6, **dadurch gekennzeichnet, dass** die Schwingungstilgermasse(n) (10, M2) aus Stahl, Leicht- oder Schwermetallwerkstoff besteht/bestehen.

8. Mehrteiliges gummigefedertes Schienenfahrzeugrad (1) nach einem der Ansprüche 1 bis 7, **dadurch gekennzeichnet, dass** die Schwingungstilgermasse(n) (M2, 10) mit quadratischem, rechteckigem oder rundem Grundriss und/oder Querschnitt, wie als Würfel, Quader, Kugel(n) oder Ringe, ausgeführt ist/sind.

9. Mehrteiliges gummigefedertes Schienenfahrzeugrad (1) nach einem der Ansprüche 1 bis 8, **dadurch gekennzeichnet, dass** die Schwingungstilgermasse(n) (M2, 10) einzeln, mehrschichtig nebeneinander und/oder untereinander angeordnet ist/sind und zur Kopplung an den Radreifen in der Aussparung (7) zur Ausbildung der/des Feder-/Dämpfungselemente(s) (11, C2/D2) mit Feder-/Dämpfungsmaterial (12) versehen ist/sind, welches vorzugsweise Polymer-/Elastomermaterialschichten bildet.

10. Mehrteiliges gummigefedertes Schienenfahrzeugrad (1) nach einem der Ansprüche 1 bis 9, **dadurch gekennzeichnet, dass** die Schwingungstilgermasse(n) (M2, 10) in der/den Aussparung(en) (7) zur Ausbildung der/des Feder-/Dämpfungselemente(s) (11, C2/D2) in Feder-/Dämpfungsmaterial (12) aus vorzugsweise Polymermaterial, insbesondere Elastomermaterial, wie NR, EPDM oder vorzugsweise VMQ, eingebettet ist/sind.

11. Mehrteiliges gummigefedertes Schienenfahrzeugrad (1) nach einem der Ansprüche 1 bis 10, **dadurch gekennzeichnet, dass** der/die Schwingungstilger (9) ringförmig umlaufend angeordnet ist oder aus einzelnen Segmenten besteht/bestehen.

12. Mehrteiliges gummigefedertes Schienenfahrzeugrad (1) nach einem der Ansprüche 1 bis 11, **dadurch gekennzeichnet, dass** der/die Schwingungstilger (9) die Aussparung(en) (7) jeweils vollständig ausfüllt/ausfüllen.

13. Mehrteiliges gummigefedertes Schienenfahrzeugrad (1) nach einem der Ansprüche 1 bis 12, **dadurch gekennzeichnet, dass** der/die Schwingungstilger (9), insbesondere deren Feder-/Dämpfungselemente (11, C2/D2) - zumindest abschnittsweise - als Hohlkörper ausgeführt sind.

14. Mehrteiliges gummigefedertes Schienenfahrzeugrad (1) nach einem der Ansprüche 1 bis 13, **dadurch gekennzeichnet, dass** der/die Schwingungstilger (9) eine oder mehrere Einzelfrequenz(en), insbesondere Eigenfrequenz(en) des Schienenrades (1), aus einem bei Betrieb des Schienenfahrzeugrades (1), insbesondere durch Axialschwingungen, entstehenden Frequenzbereich des Schalls im Bereich > 0 Hz bis 8 kHz selektiv tilgt/tilgen, indem das System, bestehend aus der einen oder den mehreren Schwingungstilgermasse(n) (M2, 10) und aus dem einen oder den mehreren Feder-/Dämpfungselement(en) (11, C2/D2), mit der Frequenz der einen oder mehreren Einzelfrequenz(en) des Schienenrades (1) gegenphasig schwingt.

15. Mehrteiliges gummigefedertes Schienenfahrzeugrad (1) nach Anspruch 14, **dadurch gekennzeichnet, dass** die Schwingungstilgermasse(n) (M2, 10) und das/die Feder-/Dämpfungselement(e) (11, C2/D2) der/des Schwingungstilger(s) (9) derart dimensioniert sind, dass die Einzelfrequenz(en), insbesondere Eigenfrequenz(en), welche der/die Schwingungstilger (9) selektiv tilgt/tilgen, im Bereich von 600 Hz bis 900 Hz, insbesondere bei 800 Hz, und/oder im Bereich von 1600 Hz bis 2200 Hz, insbesondere bei 2000 Hz, liegt/liegen.

16. Mehrteiliges gummigefedertes Schienenfahrzeugrad (1) nach einem der Ansprüche 1 bis 15, **dadurch gekennzeichnet, dass** die Schwingungstilgermasse(n) (M2, 10) der/des Schwingungstilger(s) (9) im Bereich von 5 % bis 8 % der modalen Masse (M1) des Radreifens (3) des Schienenfahrzeugrades (1) liegt/liegen.

17. Mehrteiliges gummigefedertes Schienenfahrzeugrad (1) nach einem der Ansprüche 1 bis 16, **dadurch gekennzeichnet, dass** am Radkörper (2) und/oder am Radreifen (3), insbesondere stirnseitig, ein Schallabsorber angebracht ist, der über einen bei Betrieb des Schienenfahrzeugrades (1) entstehenden Frequenzbereich des Schalls im Bereich > 0 Hz bis 8 kHz entstehenden Schalldruckpegel über das gesamte Frequenzspektrum durch Dissipation breitbandig dämpft.

18. Radreifen (3) für ein mehrteiliges gummigefedertes Schienenfahrzeugrad (1) nach einem der Ansprüche 1 bis 17, **gekennzeichnet durch** eine oder mehrere Aussparung(en) (7), an oder in der/denen mindestens ein Schwingungstilger (9), bestehend aus einer oder mehreren Schwingungstilgermasse(n) (M2, 10) und aus einem oder mehreren Feder-/Dämpfungselement(en) (11, C2/D2), angekoppelt oder eingebettet sind, wobei die Schwingungstilgermasse(n) (M2, 10) der/des Schwingungstilger(s) (9) nicht größer ist/sind als 10 % der modalen Masse (M1) des Radreifens (3) des Schienenfahrzeugrades (1).

19. Radreifen nach Anspruch 18, **dadurch gekennzeichnet, dass** die Aussparung(en) (7) mit quadratischem, rechteckigem oder rundem Grundriss und/oder Querschnitt, bevorzugt jeweils als Nut, ausgeführt ist/sind.

20. Radreifen nach Anspruch 18 oder 19 **dadurch gekennzeichnet, dass** in der/den Aussparung(en) (7) formschlüssig wirkende Fixierelemente (14), wie Nuten oder ballige Wandungen, vorgesehen sind, die den/die Schwingungstilger (9) in Position halten.

21. Radreifen nach einem der Ansprüche 18 bis 20, **dadurch gekennzeichnet, dass** die Aussparung(en) in einem Fußbereich (8) des Radreifens (3) und/oder seitlich an zumindest einer Stirnseite des Radreifens (3) angeordnet ist/sind.

## Claims

1. Multi-part rubber-sprung rail vehicle wheel (1) with at least one rubber ring (5) arranged between a wheel body (2) and a wheel tire (3) or with several individual rubber elements (5) arranged between a wheel body (2) and a wheel tire (3), wherein these are clamped between the wheel body (2) and the wheel tire (3) by means of a clamping ring (4) and the clamping ring (4) is releasably fastened to the wheel body (2) by means of fastening elements (6), **characterized in that** the wheel tire (3) has one or more recess(es) (7) on or in which at least one vibration absorber (9), consisting of one or more vibration absorber mass(es) (M2, 10) and of one or more spring/damping element(s) (11, C2/D2), is coupled or embedded, wherein the vibration absorber mass(es) (M2, 10) of the vibration absorber(s) (9) is/are not greater than 10% of the modal mass (M1) of the wheel tire (3) of the rail vehicle wheel (1).

2. Multi-part rubber-sprung rail vehicle wheel (1) according to claim 1, **characterized in that** the recess(es) (7) is/are designed with a square, rectangular or round footprint and/or cross-section, preferably each as a groove.

3. Multi-part rubber-sprung rail vehicle wheel (1) according to claim 1 or 2, **characterized in that** form-fitting fixing elements (14), such as grooves or crowned walls, are provided in the recess(es) (7), which hold the vibration absorber(s) (9) in position.

4. Multi-part rubber-sprung rail vehicle wheel (1) according to one of claims 1 to 3, **characterized in that** the recess(es) is/are arranged in a foot region (8) of the wheel tire (3) and/or laterally on at least one end face of the wheel tire (3).

5. Multi-part rubber-sprung rail vehicle wheel (1) according to one of claims 1 to 4, **characterized in that** the vibration absorber(s) (9) introduced into the recess(es) (7) rest(s) - with or without a spacing gap - on the preferably V-shaped rubber ring (5) or the several individual rubber elements (5), wherein in particular the axis/axes (Z-Z) of the recess(es) (7) and of the vibration absorber(s) (9) introduced therein coincide(s) with an axis of symmetry (Y-Y) of the rubber ring (5) or the rubber elements (5) running perpendicular to the wheel axis (X-X).

6. Multi-part rubber-sprung rail vehicle wheel (1) according to one of claims 1 to 5, **characterized in that** a depth (T) of the recess(es) (7) - measured starting from a/the foot region (8) on the circumference of an internally circumferential web (13) of the wheel tire (3) - is in each case not greater than 120 percent, preferably not greater than 100 percent, of a radial height (H) over which, in the assembled case, a/the preferably V-shaped rubber ring (5) or the several individual rubber elements (5) extend(s) along the wheel tire (3).

7. Multi-part rubber-sprung rail vehicle wheel (1) according to one of claims 1 to 6, **characterized in that** the vibration absorber mass(es) (10, M2) consist(s) of steel, light or heavy metal material.

8. Multi-part rubber-sprung rail vehicle wheel (1) according to one of claims 1 to 7, **characterized in that** the vibration absorber mass(es) (M2, 10) is/are designed with a square, rectangular or round footprint and/or cross-section, such as cubes, cuboids, sphere(s) or rings.

9. Multi-part rubber-sprung rail vehicle wheel (1) according to one of claims 1 to 8, **characterized in that** the vibration absorber mass(es) (M2, 10) is/are arranged individually, in multiple layers next to one another and/or below one another and is/are provided with spring/damping material (12) for coupling to the wheel tire in the recess (7) to form the spring/damping element(s) (11, C2/D2), which preferably forms polymer/elastomer material layers.

10. Multi-part rubber-sprung rail vehicle wheel (1) according to one of claims 1 to 9, **characterized in that** the vibration absorber mass(es) (M2, 10) is/are embedded in the recess(es) (7) in spring/damping material (12) made of preferably polymer material, in particular elastomer material, such as NR, EPDM or preferably VMQ, to form the spring/damping element(s) (11, C2/D2).

11. Multi-part rubber-sprung rail vehicle wheel (1) according to one of claims 1 to 10, **characterized in that** the vibration absorber(s) (9) is/are arranged in a circumferentially running ring or consist(s) of individual segments.

12. Multi-part rubber-sprung rail vehicle wheel (1) according to one of claims 1 to 11, **characterized in that** the vibration absorber(s) (9) completely fill(s) the recess(es) (7) in each case.

13. Multi-part rubber-sprung rail vehicle wheel (1) according to one of claims 1 to 12, **characterized in that** the vibration absorber(s) (9), in particular their spring/damping elements (11, C2/D2) - at least in sections - are designed as hollow bodies.

14. Multi-part rubber-sprung rail vehicle wheel (1) according to one of claims 1 to 13, **characterized in that** the vibration absorber(s) (9) selectively absorb(s) one or more individual frequency(ies), in particular natural frequency(ies) of the rail wheel (1), from a frequency range of sound in the range > 0 Hz to 8 kHz arising during operation of the rail vehicle wheel (1), in particular due to axial vibrations, **in that** the system consisting of the one or more vibration absorber mass(es) (M2, 10) and of the one or more spring/damping element(s) (11, C2/D2) vibrates in counter-phase with the frequency of the one or more individual frequency(ies) of the rail wheel (1).

15. Multi-part rubber-sprung rail vehicle wheel (1) according to claim 14, **characterized in that** the vibration absorber mass(es) (M2, 10) and the spring/damping element(s) (11, C2/D2) of the vibration absorber(s) (9) are dimensioned such that the individual frequency(ies), in particular natural frequency(ies), which the vibration absorber(s) (9) selectively absorb(s), lie(s) in the range of 600 Hz to 900 Hz, in particular at 800 Hz, and/or in the range of 1600 Hz to 2200 Hz, in particular at 2000 Hz.

16. Multi-part rubber-sprung rail vehicle wheel (1) according to one of claims 1 to 15, **characterized in that** the vibration absorber mass(es) (M2, 10) of the vibration absorber(s) (9) lie(s) in the range of 5% to 8% of the modal mass (M1) of the wheel tire (3) of the rail vehicle wheel (1).

17. Multi-part rubber-sprung rail vehicle wheel (1) according to one of claims 1 to 16, **characterized in that** a sound absorber is attached to the wheel body (2) and/or to the wheel tire (3), in particular on the end face, which broadband dampens by dissipation a sound pressure level arising over a frequency range of sound in the range > 0 Hz to 8 kHz arising during operation of the rail vehicle wheel (1) over the entire frequency spectrum.

18. Wheel tire (3) for a multi-part rubber-sprung rail vehicle wheel (1) according to one of claims 1 to 17, **characterized by** one or more recess(es) (7) on or in which at least one vibration absorber (9), consisting of one or more vibration absorber masses (M2, 10) and one or more spring/damping element(s) (11, C2/D2), is coupled or embedded, wherein the vibration absorber mass(es) (M2, 10) of the vibration absorber(s) (9) is/are not greater than 10% of the modal mass (M1) of the wheel tire (3) of the rail vehicle wheel (1).

19. Wheel tire according to claim 18, **characterized in that** the recess(es) (7) is/are designed with a square, rectangular or round footprint and/or cross-section, preferably each as a groove.

20. Wheel tire according to claim 18 or 19, **characterized in that** form-fitting fixing elements (14), such as grooves or crowned walls, are provided in the recess(es) (7), which hold the vibration damper(s) (9) in position.

21. Wheel tire according to one of claims 18 to 20, **characterized in that** the recess(es) is/are arranged in a foot region (8) of the wheel tire (3) and/or laterally on at least one end face of the wheel tire (3).

## Revendications

1. Roue de véhicule ferroviaire (1) à suspension élastique en caoutchouc en plusieurs parties comportant au moins un anneau en caoutchouc (5) disposé entre un corps de roue (2) et un bandage de roue (3) ou comportant plusieurs éléments en caoutchouc individuels (5) disposés entre un corps de roue (2) et un bandage de roue (3), celui-ci/ceux-ci étant serré(s) au moyen d'un anneau de serrage (4) entre le corps de roue (2) et le bandage de roue (3) et l'anneau de serrage (4) étant fixé de manière amovible au corps de roue (2) au moyen d'éléments de fixation (6),
   **caractérisée en ce que** le bandage de roue (3) présente un ou plusieurs évidement(s) (7), à ou dans lequel/lesquels au moins un amortisseur de vibrations (9), constitué d'une ou plusieurs masse(s) d'amortisseur de vibrations (M2, 10) et d'un ou plusieurs élément(s) ressort/amortissement (11, C2/D2), est couplé ou intégré, la/les masse(s) d'amortisseur de vibrations (M2, 10) de l'/des amortisseur(s) de vibrations (9) n'étant pas supérieure(s) à 10 % de la masse modale (M1) du bandage de roue (3) de la roue de véhicule ferroviaire (1).

2. Roue de véhicule ferroviaire (1) à suspension élastique en caoutchouc en plusieurs parties selon la revendication 1,
   **caractérisée en ce que** le(s) évidement(s) (7) est/sont réalisé(s) avec un contour et/ou une section transversale carré(e), rectangulaire ou rond(e), de préférence chacun sous forme de rainure.

3. Roue de véhicule ferroviaire (1) à suspension élastique en caoutchouc en plusieurs parties selon la revendication 1 ou 2,
   **caractérisée en ce que** dans le(s) évidement(s) (7) sont prévus des éléments de fixation (14) agissant par liaison de forme, tels que des rainures ou des parois bombées, qui maintiennent le(s) amortisseur(s) de vibrations (9) en position.

4. Roue de véhicule ferroviaire (1) à suspension élastique en caoutchouc en plusieurs parties selon l'une des revendications 1 à 3,
   **caractérisée en ce que** le(s) évidement(s) est/sont disposé(s) dans une zone de pied (8) du bandage de roue (3) et/ou latéralement sur au moins une face frontale du bandage de roue (3).

5. Roue de véhicule ferroviaire (1) à suspension élastique en caoutchouc en plusieurs parties selon l'une des revendications 1 à 4,
   **caractérisée en ce que** le(s) amortisseur(s) de vibrations (9) introduit(s) dans le(s) évidement(s) (7) repose(nt) - avec ou sans un espace d'écartement - sur l'anneau en caoutchouc (5) réalisé de préférence en forme de V ou sur les plusieurs éléments en caoutchouc individuels (5), l'/les axe(s) (Z-Z) du/des évidement(s) (7) et du/des amortisseur(s) de vibrations (9) qui y est/sont introduit(s) coïncidant notamment avec un axe de symétrie (Y-Y) perpendiculaire à l'axe de roue (X-X) de l'anneau en caoutchouc (5) ou des éléments en caoutchouc (5).

6. Roue de véhicule ferroviaire (1) à suspension élastique en caoutchouc en plusieurs parties selon l'une des revendications 1 à 5,
   **caractérisée en ce qu'**une profondeur (T) du/des évidement(s) (7) - mesurée à partir d'une/de la zone de pied (8) sur la circonférence d'une nervure périphérique intérieure (13) du bandage de roue (3) - n'est respectivement pas supérieure à 120 pour cent, de préférence pas supérieure à 100 pour cent, d'une hauteur radiale (H) sur laquelle, dans le cas du montage, un/l'anneau en caoutchouc (5) réalisé de préférence en forme de V ou les plusieurs éléments en caoutchouc individuels (5) s'étendent le long du bandage de roue (3).

7. Roue de véhicule ferroviaire (1) à suspension élastique en caoutchouc en plusieurs parties selon l'une des revendications 1 à 6,
   **caractérisée en ce que** la/les masse(s) d'amortisseur de vibrations (10, M2) est/sont constituée(s) d'acier, de matériaux en métaux légers ou lourds.

8. Roue de véhicule ferroviaire (1) à suspension élastique en caoutchouc en plusieurs parties selon l'une des revendications 1 à 7,
   **caractérisée en ce que** la/les masse(s) d'amortisseur de vibrations (M2, 10) est/sont réalisée(s) avec un contour et/ou une section transversale carré(e), rectangulaire ou rond(e), comme sous forme de cube, de parallélépipède, de sphère(s) ou d'anneaux.

9. Roue de véhicule ferroviaire (1) à suspension élastique en caoutchouc en plusieurs parties selon l'une des revendications 1 à 8,
   **caractérisée en ce que** la/les masse(s) d'amortisseur de vibrations (M2, 10) est/sont disposée(s) individuellement, en plusieurs couches les unes à côté des autres et/ou les unes sur les autres et est/sont pourvue(s), pour le couplage au bandage de roue dans l'évidement (7), pour la formation du/des élément(s) ressort/amortissement (11, C2/D2), d'un matériau ressort/amortissement (12), qui forme de préférence des couches de matériau polymère/élastomère.

10. Roue de véhicule ferroviaire (1) à suspension élastique en caoutchouc en plusieurs parties selon l'une des revendications 1 à 9, **caractérisée en ce que** la/les masse(s) d'amortisseur de vibrations (M2, 10) est/sont intégrée(s) dans le(s) évidement(s) (7), pour la formation du/des élément(s) ressort/amortissement (11, C2/D2), dans un matériau ressort/amortissement (12) constitué de préférence de matériau polymère, notamment de matériau élastomère, tel que NR, EPDM ou de préférence VMQ.

11. Roue de véhicule ferroviaire (1) à suspension élastique en caoutchouc en plusieurs parties selon l'une des revendications 1 à 10, **caractérisée en ce que** le(s) amortisseur(s) de vibrations (9) est/sont disposé(s) de manière annulaire périphérique ou est/sont constitué(s) de segments individuels.

12. Roue de véhicule ferroviaire (1) à suspension élastique en caoutchouc en plusieurs parties selon l'une des revendications 1 à 11, **caractérisée en ce que** le(s) amortisseur(s) de vibrations (9) remplit/remplissent respectivement entièrement le(s) évidement(s) (7).

13. Roue de véhicule ferroviaire (1) à suspension élastique en caoutchouc en plusieurs parties selon l'une des revendications 1 à 12, **caractérisée en ce que** le(s) amortisseur(s) de vibrations (9), notamment leurs éléments ressort/amortissement (11, C2/D2), sont réalisés - au moins par sections - sous forme de corps creux.

14. Roue de véhicule ferroviaire (1) à suspension élastique en caoutchouc en plusieurs parties selon l'une des revendications 1 à 13, **caractérisée en ce que** le(s) amortisseur(s) de vibrations (9) élimine(nt) sélectivement une ou plusieurs fréquence(s) individuelle(s), notamment fréquence(s) propre(s) de la roue de véhicule ferroviaire (1), d'une plage de fréquences du son dans la plage > 0 Hz à 8 kHz générée lors du fonctionnement de la roue de véhicule ferroviaire (1), notamment par des vibrations axiales, **en ce que** le système, constitué de la ou des plusieurs masse(s) d'amortisseur de vibrations (M2, 10) et du ou des plusieurs élément(s) ressort/amortissement (11, C2/D2), oscille en opposition de phase avec la fréquence de la ou des plusieurs fréquence(s) individuelle(s) de la roue ferroviaire (1).

15. Roue de véhicule ferroviaire (1) à suspension élastique en caoutchouc en plusieurs parties selon la revendication 14, **caractérisée en ce que** la/les masse(s) d'amortisseur de vibrations (M2, 10) et le(s) élément(s) ressort/amortissement (11, C2/D2) de l'/des amortisseur(s) de vibrations (9) sont dimensionnés de telle sorte que la/les fréquence(s) individuelle(s), notamment fréquence(s) propre(s), que le(s) amortisseur(s) de vibrations (9) élimine(nt) sélectivement, se situe(nt) dans la plage de 600 Hz à 900 Hz, notamment à 800 Hz, et/ou dans la plage de 1600 Hz à 2200 Hz, notamment à 2000 Hz.

16. Roue de véhicule ferroviaire (1) à suspension élastique en caoutchouc en plusieurs parties selon l'une des revendications 1 à 15, **caractérisée en ce que** la/les masse(s) d'amortisseur de vibrations (M2, 10) de l'/des amortisseur(s) de vibrations (9) se situe(nt) dans la plage de 5 % à 8 % de la masse modale (M1) du bandage de roue (3) de la roue de véhicule ferroviaire (1).

17. Roue de véhicule ferroviaire (1) à suspension élastique en caoutchouc en plusieurs parties selon l'une des revendications 1 à 16, **caractérisée en ce qu'**un absorbeur acoustique est monté sur le corps de roue (2) et/ou sur le bandage de roue (3), notamment sur la face frontale, lequel amortit sur une large bande de fréquences par dissipation, sur l'ensemble du spectre de fréquences, un niveau de pression acoustique généré sur une plage de fréquences du son dans la plage > 0 Hz à 8 kHz générée lors du fonctionnement de la roue de véhicule ferroviaire (1).

18. Bandage de roue (3) pour une roue de véhicule ferroviaire (1) à suspension élastique en caoutchouc en plusieurs parties selon l'une des revendications 1 à 17, **caractérisé par** un ou plusieurs évidement(s) (7), à ou dans lequel/lesquels au moins un amortisseur de vibrations (9), constitué d'une ou plusieurs masse(s) d'amortisseur de vibrations (M2, 10) et d'un ou plusieurs élément(s) ressort/amortissement (11, C2/D2), est couplé ou intégré, la/les masse(s) d'amortisseur de vibrations (M2, 10) de l'/des amortisseur(s) de vibrations (9) n'étant pas supérieure(s) à 10 % de la masse modale (M1) du bandage de roue (3) de la roue de véhicule ferroviaire (1).

19. Bandage de roue selon la revendication 18, **caractérisé en ce que** le(s) évidement(s) (7) est/sont réalisé(s) avec un contour et/ou une section transversale carré(e), rectangulaire ou rond(e), de préférence chacun sous forme de rainure.

20. Bandage de roue selon la revendication 18 ou 19 **caractérisé en ce que** dans le(s) évidement(s) (7) sont prévus des éléments de fixation (14) agissant par liaison de forme, tels que des rainures ou des parois bombées, qui maintiennent le(s) amortisseur(s) de vibrations (9) en position.

21. Bandage de roue selon l'une des revendications 18 à 20,
**caractérisé en ce que** le(s) évidement(s) est/sont disposé(s) dans une zone de pied (8) du bandage de roue (3) et/ou latéralement sur au moins une face frontale du bandage de roue (3).

# Fig. 1

Fig. 3

Fig. 2

## Fig. 4

Fig. 6

Fig. 5

EP 4 580 890 B1

**Fig. 7**

**Fig. 8**

1

7

Y, Z

3

9

10

11
(12)

13

4

5

6

T = H

8

2

Y, Z

**Fig. 9**

**Fig. 10**

**Fig. 11**

**Fig. 12**

**Fig. 13**

Fig. 14

**Fig. 15**

Fig. 16

— — ohne Tiger
— — mit Tiger, ohne Dämpfung
······ mit Tiger, kleine Dämpfung
——— mit Tiger, optimale Dämpfung

Anregungsfrequenz → [Hz]

Übertragungsfunktion → [dB]

**Fig. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0489455 B1
- EP 0733493 B1
- EP 0827574 B1
- EP 2881260 B1
- EP 3218208 B1
- EP 3509872 B1
- DE 3033246 C2
- DE 3120068 C2
- DE 3243028 C1
- DE 3316759 C1
- DE 19617684 A1
- EP 2554399 B1
- DE 19832266 A1
- DE 3136275 C1
- AT 364772 B
- DE 2835020 A1
- CH 299561 A
- EP 0020284 B1
- EP 1892122 B1
- EP 3429870 B1

**In der Beschreibung aufgeführte Nicht-Patentliteratur**

- **THOMAS GERLACH et al.** Methods for developing low-noise wheels in terms of rolling noise, curve squeal and ground vibrations. *International Wheelset Congress*, 08 May 2023
- **VON B. ASMUSSEN** ; **M. STARNBERG** ; **B. BETGEN** ; **P. BOUVET** ; **A. MARTINOT-LAGARDE** ; **F. MARGIOCCHI** ; **F. AUBIN** ; **D. THOMPSON** ; **G. SQUICCIARINI** ; **M. TOWARD**. *Standardization of damping technologies for the reduction of railway noise*, 27 May 2013